# EUROPEAN PATENT APPLICATION

(11) **EP 4 835 795 A1**
(43) Date of publication of application: **04.11.2026**
(21) Application number: 24911928.0
(22) Date of filing: 11.10.2024
(51) Int. Cl.: G06Q 30/0601, G06Q 50/10

(54) **COMPUTER SYSTEM AND RECOMMENDATION INFORMATION PROVISION CONTROL METHOD**

(30) Priority: 29.12.2023 JP 2023223776
(71) Applicant: ZOZO, Inc., Chiba-shi, Chiba, 263-0023 (JP)
(72) Inventor: IETA, Tsuyoshi, Chiba-shi, Chiba 263-0023 (JP); FUJII, Yuki, Chiba-shi, Chiba 263-0023 (JP); AOYAGI, Miki, Chiba-shi, Chiba 263-0023 (JP); MIYAGOSHI, Risa, Chiba-shi, Chiba 263-0023 (JP); LI, Bo, Auckland 1023 (NZ); JELLEYMAN, Hamish, Auckland 1023 (NZ); BRENNAN, Matthew, Auckland 1023 (NZ)
(74) Representative: Gunzelmann, Rainer
(86) International application number: PCT/JP2024/036525
(87) International publication number: WO 2025/142035

(57) **Abstract**

A computer system that performs control for presenting recommendation information relating to an item to a user includes a recommended date estimation section and a recommendation control section. The recommended date estimation section estimates a first recommended purchase date that is a recommended purchase date of a first item, based on measurement size information relating to a measurement size of the item, body information of a first target user with respect to a wearing part on which the item is worn, and the measurement size information of a wearing item suitable for the first target user to wear at a current time point. The recommendation control section provides the first recommended purchase date and additional information for recommending purchase of the first item.

## Description

### [TECHNICAL FIELD]

The present invention relates to a computer system or the like that displays, on a terminal apparatus, recommendation information on items wearable by a user.

### [BACKGROUND ART]

There have been conventionally proposed technologies for providing information about clothing that corresponds to changes in the wearer's body shape. For example, Patent Document 1 discloses a technology for providing information for making purchase decisions about children's clothing. Specifically, according to the technology of Patent Document 1, the allowable sizes of children's clothing that can be worn are stored in advance, and the limit date and time at which the wearing user (child user) will no longer be able to wear the children's clothing are predicted based on the allowable sizes and the growth pattern of the wearing user. Therefore, the user can consider purchasing children's clothing after knowing the period during which the clothing can be worn.

### [RELATED-ART DOCUMENT]

### [PATENT DOCUMENT]

Patent Document 1: Japanese Unexamined Patent Application Publication No. 2007-265077

### [SUMMARY OF THE INVENTION]

### [TECHNICAL PROBLEM]

However, while the technique of Patent Document 1 presents the user with a wearable period until a child user outgrows the child clothing, it does not present a specific timing for recommending the purchase of a size that becomes wearable thereafter. Furthermore, although clothing has been described as an example of a wearable item, similar issues exist for wearable items other than clothing, such as shoes and hats, for example.

An object to be achieved by the present invention is to provide a technique for presenting, to a target user who wears an item, information indicating a recommended purchase date of the item.

### [SOLUTION TO PROBLEM]

According to a first invention of the present disclosure, there is provided a computer system that performs control for presenting recommendation information relating to an item to a user, comprising:
a recommended date estimation section that estimates a first recommended purchase date that is a recommended purchase date of a first item, based on measurement size information relating to a measurement size of the item, body information of a first target user with respect to a wearing part on which the item is worn, and the measurement size information of a wearing item suitable for the first target user to wear at a current time point; and
a recommendation control section that provides the first recommended purchase date and additional information for recommending purchase of the first item.

According to a second invention of the present disclosure, there is provided a computer system that performs control for presenting recommendation information relating to an item to a user, comprising:
a recommended date estimation section that estimates a first recommended purchase date that is a recommended purchase date of the item to be worn by a first target user, using body information of the first target user with respect to a wearing part on which the item is worn; and
a recommendation control section that performs recommended date presentation control based on the first recommended purchase date,
wherein the recommendation control section performs the recommended date presentation control, including control for providing information for displaying
   a first predicted change graph that indicates predicted changes of the body information of the first target user, and
   a first instruction element indicating a point on the first predicted change graph corresponding to the first recommended purchase date.

According to a third invention of the present disclosure, there is provided a recommendation information provision control method for causing a computer system to perform control for presenting recommendation information relating to an item to a user, comprising:
estimating a first recommended purchase date that is a recommended purchase date of a first item, based on measurement size information relating to a measurement size of the item, body information of a first target user with respect to a wearing part on which the item is worn, and the measurement size information of a wearing item suitable for the first target user to wear at a current time point; and
providing the first recommended purchase date and additional information for recommending purchase of the first item.

According to a fourth invention of the present disclosure, there is provided a recommendation information provision control method for causing a computer system to perform control for presenting recommendation information relating to an item to a user, comprising:
estimating a first recommended purchase date that is a recommended purchase date of the item to be worn by a first target user, using body information of the first target user with respect to a wearing part on which the item is worn; and
performing recommended date presentation control based on the first recommended purchase date,
wherein the recommended date presentation control includes control for providing information for displaying
   a first predicted change graph that indicates predicted changes of the body information of the first target user, and
   a first instruction element indicating a point on the first predicted change graph corresponding to the first recommended purchase date.

### [BRIEF DESCRIPTION OF DRAWINGS]

[FIG. 1] FIG. 1 is a diagram illustrating an overall configuration example of an online shopping system.
[FIG. 2] FIG. 2 is a diagram illustrating an apparatus configuration example of a terminal apparatus.
[FIG. 3] FIG. 3 is a diagram for describing association between a registered user ID and a wearing user ID.
[FIG. 4] FIG. 4 is a diagram illustrating an example of comfort level variation information on an item I1 for a wearing user U11.
[FIG. 5] FIG. 5 is a diagram illustrating an example of comfort level variation information on an item I2 for a wearing user U11.
[FIG. 6] FIG. 6 is a diagram illustrating an example of comfort level variation information on an item I3 for a wearing user U11.
[FIG. 7] FIG. 7 is a diagram for describing an overview of an estimation process.
[FIG. 8] FIG. 8 is a diagram illustrating an example of a recommendation display screen.
[FIG. 9] FIG. 9 is a diagram illustrating another example of a recommendation display screen.
[FIG. 10] FIG. 10 is a diagram illustrating another example of a recommendation display screen.
[FIG. 11] FIG. 11 is a diagram illustrating another example of a recommendation display screen.
[FIG. 12] FIG. 12 is a diagram illustrating another example of a recommendation display screen.
[FIG. 13] FIG. 13 is a diagram illustrating another example of a recommendation display screen.
[FIG. 14] FIG. 14 is a diagram illustrating another example of a recommendation display screen.
[FIG. 15] FIG. 15 is a block diagram illustrating a functional configuration example of a server system.
[FIG. 16] FIG. 16 is a diagram illustrating a data configuration example of user management data.
[FIG. 17] FIG. 17 is a block diagram illustrating a functional configuration example of a terminal apparatus.
[FIG. 18] FIG. 18 is a flowchart illustrating a flow of processing in the server system.
[FIG. 19] FIG. 19 is a diagram illustrating a recommendation display screen in a modification example.

### [DESCRIPTION OF EMBODIMENTS]

Hereinafter, preferred embodiments of the present invention will be described with reference to the drawings. It should be noted that the present invention is not limited to the embodiments described below, and the forms to which the present invention can be applied are not limited to the following embodiments. In addition, in the drawings, the same parts are denoted by the same reference signs. In the following description, shoes (low shoes), which are a type of footwear, will be taken as an example of an item. However, the same description can be applied to sale of shoes including boots (long shoes) as an item, and can also be applied to sale of other items such as clothing and hats.

### [Overall Configuration]

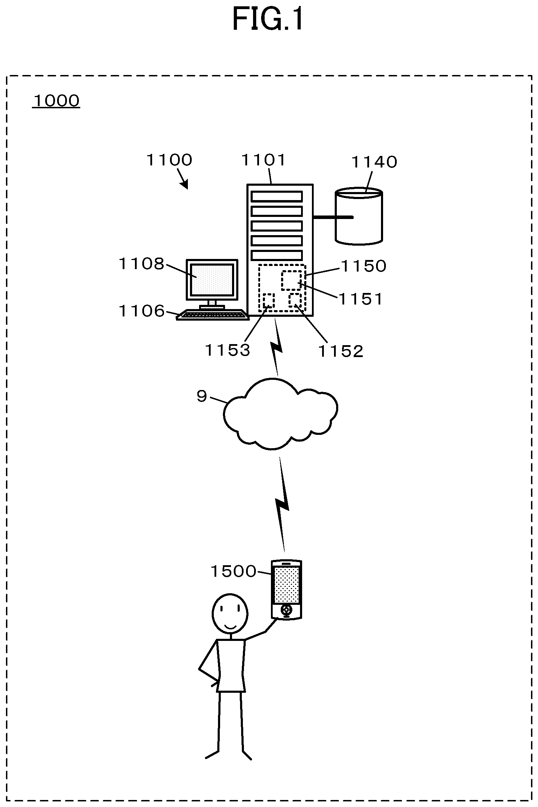

FIG. 1 is a diagram illustrating an overall configuration example of an online shopping system 1000 according to the present embodiment. As illustrated in FIG. 1, the online shopping system 1000 includes a server system 1100 and a terminal apparatus 1500, which are connected via a network 9 so as to be capable of data communication with each other. The online shopping system 1000 provides an online shopping service that sells wearable items to users. Hereinafter, shoes are described as an example of an item; however, the same applies to selling other items.

The network 9 is a communication channel that enables data communications. Specifically, the network 9 includes a communication network such as a local area network (LAN) using a private line (a private cable) for direct connection, Ethernet (registered trademark), or the like, a telecommunication network, a cable network, the Internet, and the like. The communication method can be either wired or wireless.

The server system 1100 is a computer system including a main apparatus 1101, a keyboard 1106, a touch panel 1108, and a storage 1140. The main apparatus 1101 incorporates a control board 1150 on which are mounted various microprocessors such as a central processing unit (CPU) 1151, a graphics processing unit (GPU), and a digital signal processor (DSP), various IC memories 1152 such as VRAM, RAM, and ROM, and electronic components such as a communication device 1153. In addition, part or all of the control board 1150 may be implemented by an application specific integrated circuit (ASIC), a field-programmable gate array (FPGA), or a system on a chip (SoC).

By having the CPU 1151 and other devices perform calculations based on predetermined programs and data, the server system 1100 realizes a user management function of registering users and manages data by linking the users to accounts, and an online shopping function of providing online shopping services. This includes providing programs for the terminal apparatus 1500 to realize each function, and various data required to execute the programs. A user who has completed the registration procedure (registered user) accesses the server system 1100 with his/her own terminal apparatus 1500, logs in with the issued registered user ID, and performs online shopping.

Although FIG. 1 illustrates only one terminal apparatus 1500, in actual system operation, a plurality of terminal apparatuses 1500 can access the server system 1100 at the same time.

Although the server system 1100 is depicted as if it were a single server apparatus, it may be implemented by a plurality of apparatuses. For example, the server system 1100 may be configured such that a plurality of blade servers are connected together via an internal bus in a data communicable manner to share the functions. Further, the place where the hardware constituting the server system 1100 is installed is not limited. The server system 1100 may be configured such that a plurality of independent servers installed at distant places perform data communication via the network 9 to thereby function as the server system 1100 as a whole.

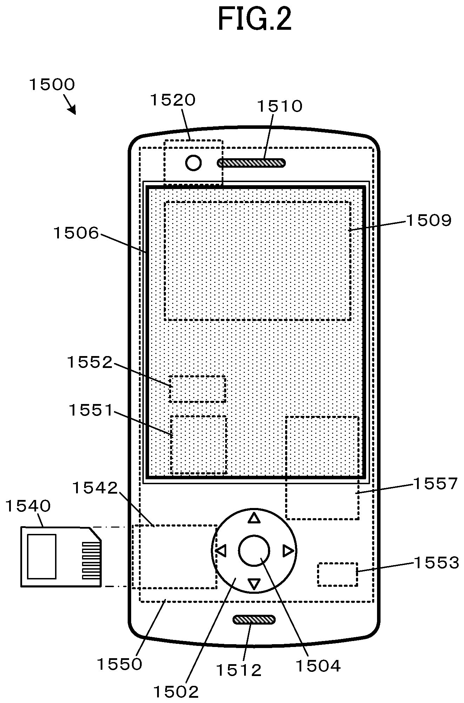

The terminal apparatus 1500 is a computer system that functions as a man-machine interface, and is connected to the network 9 via a communication base station or the like, and can perform data communication with the server system 1100. The terminal apparatus 1500 illustrated in FIG. 2 is classified as a smartphone, but may be a wearable computer such as a smartwatch, a portable game device, a tablet computer, a personal computer, or the like, as long as it is a computer. In a case where a plurality of electronic devices, such as a combination of a smartphone and a smartwatch connected to the smartphone, are organically linked to perform a single function, the plurality of electronic devices can be considered as a single terminal apparatus 1500.

FIG. 2 is a diagram illustrating an apparatus configuration example of a smartphone, which is an example of the terminal apparatus 1500. As illustrated in FIG. 2, the terminal apparatus 1500 includes a directional input key 1502, a home key 1504, a touch panel 1506 that functions as an image display device and a contact position input device, a built-in battery 1509, a speaker 1510, a microphone 1512, a camera 1520, a control board 1550, and a memory card reader 1542 that can read and write data from and into a memory card 1540, which is a computer-readable storage medium. In addition, the terminal apparatus 1500 also includes a power button, a volume control button, and the like (not illustrated).

The control board 1550 is equipped with various microprocessors such as a CPU 1551, GPU, and DSP, various IC memories 1552 such as VRAM, RAM, and ROM, a wireless communication module 1553 for wireless communication with mobile phone base stations and wireless communication base stations connected to the network 9, an interface circuit 1557, and the like. The interface circuit 1557 includes a circuit for receiving signals from the directional input key 1502 and the home key 1504, a driver circuit for the touch panel 1506, an output amplifier circuit for outputting audio signals to the speaker 1510, an audio signal generation circuit for generating audio signals collected by the microphone 1512, a circuit for inputting image signals captured by the camera 1520, a signal input/output circuit for the memory card reader 1542, and the like.

The elements mounted on the control board 1550 are electrically connected to each other via bus circuits or the like to enable reading and writing of data and sending and receiving of signals. Part or all of the control board 1550 may be configured using an ASIC, FPGA, or SoC. The control board 1550 stores programs and various data for realizing the functions of the terminal apparatus in the IC memory 1552.

In the present embodiment, the terminal apparatus 1500 is configured to download programs and various setting data from the server system 1100. Alternatively, the terminal apparatus 1500 may be configured to read the programs and data from a storage medium such as the memory card 1540 obtained separately.

### [Details]

### 1. User Management Function

In order to realize the user management function, the server system 1100 executes a process related to user registration (user registration process) and a process related to managing the data of registered users who have undergone the registration procedure and the data of wearing users associated with the registered users (data management process).

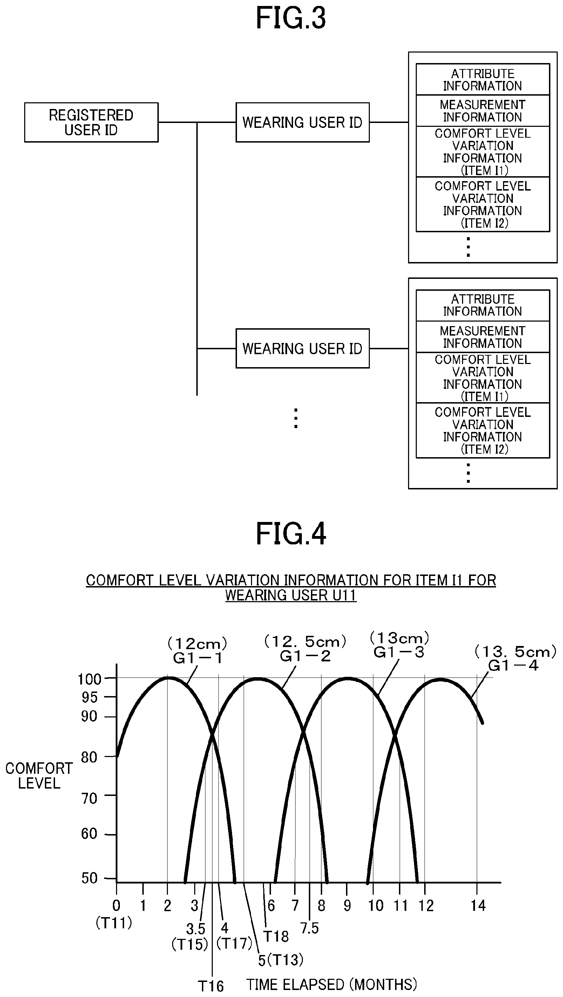

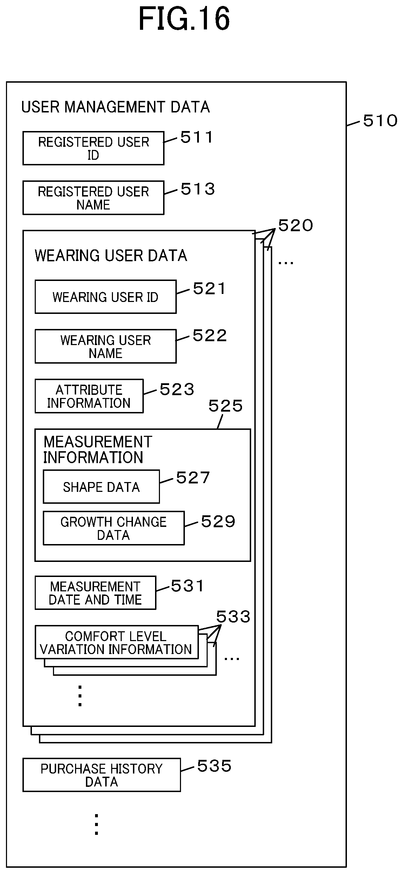

In the present embodiment, as illustrated in FIG. 3, the registered user ID of a registered user can be associated with the wearing user IDs of one or more wearing users. A registered user is a user who logs in with his/her registered user ID and conducts online shopping for various items such as shoes. On the other hand, a wearing user is a user who wears shoes purchased by a registered user. The wearing user may be the registered user himself/herself, a family member, or a friend. In the present embodiment, for ease of understanding, an example will be taken in which the wearing user is a child of a registered user. When a registered user registers a child as an additional wearing user, a wearing user ID is issued to the wearing user. Each wearing user ID is stored in association with user data (see wearing user data 520 in FIG. 16) relating to the wearing user acquired in a data acquisition process described later. The user data includes attribute information such as the age and gender of the wearing user, measurement information of the wearing user who has been measured on the body part (in the present embodiment, the foot) where the item (in the present embodiment, shoes) is worn, and comfort level variation information generated using the attribute information and measurement information of the wearing user. As will be described later, the comfort level variation information is generated for each user wearing an item (in the present embodiment, shoes sold through the online shopping service).

### 2. Online Shopping Function

To realize the online shopping function, the server system 1100 performs a data acquisition process to acquire user data related to the target user. In addition, when a registered user logs in from a terminal apparatus 1500, the server system 1100 displays product information of items on that terminal apparatus 1500. Then, prior to displaying the product information, the server system 1100 performs an estimation process of estimating a recommended purchase date of an item for each of the wearing users associated with the registered user, and a recommendation control process of performing a recommended date presentation control based on the recommended purchase date.

### 2-1. Data Acquisition Process

In the data acquisition process, the server system 1100 acquires user data of the wearing user specified by the registered user on the terminal apparatus 1500 as the target user. For example, when the registered user registers a new wearing user or when the registered user wishes measurement in relation to the measurement information of a wearing user, the registered user performs an operation of specifying the wearing user as a target user.

When an operation that specifies a target user is detected, the server system 1100 first acquires attribute information of the target user. The attribute information can be acquired by accepting input operations of age and gender on the terminal apparatus 1500.

Next, the server system 1100 acquires measurement information of the target user. The measurement information includes shape data of the body part (in the present embodiment, the foot) and growth change data of the body part. For example, the measurement information can be acquired by measuring a foot size using a measuring means capable of measuring the foot size. As an example, first, a predetermined mat on which a number of dots (markers) are drawn for measurement is prepared, and the target user's feet are placed on the mat and photographed from a plurality of directions by the terminal apparatus 1500. Then, a 3D model of the foot is created based on the dots (markers) on the mat from the photographic data, and various data (shape data) related to the shape of the target user's foot, such as the overall shape of the foot, the shape of the instep, foot size, foot width, and whether or not the foot is flat, are measured. Alternatively, a different method may be used as long as similar data can be acquired. For example, the target user's feet are placed on a flat surface and photographed from a plurality of directions using the terminal apparatus 1500, and photogrammetry processing is performed based on the photographic data to measure similar data. The measurement process may be executed by the terminal apparatus 1500, or may be executed by the server system 1100 after the server system 1100 acquires the photographic data. The difference in configuration is whether the terminal apparatus 1500 or the server system 1100 has the measurement means. Alternatively, similar data may be acquired by manually inputting numerical values of the target user's foot length or the like into the terminal apparatus 1500. In either case, the server system 1100 ultimately acquires the measurement data (measurement results). The server system 1100 then predicts growth changes in the target user's feet based on the measurement results and the target user's attribute information. For example, the foot size for each age (for example, age in months) after the measurement timing is predicted, and predicted changes in size for each age in months are obtained as growth change data. The server system 1100 acquires the obtained shape data and growth change data as measurement information of the target user.

The growth change data may be data on growth changes in the average foot size of children of the same gender (average foot size for each age in months). Alternatively, growth change data of children with fast growth rates (average foot size for each age in months) and growth change data of children with slow growth rates (average foot size for each age in months) may be prepared in advance, and the data (average value) corresponding to the growth rate of the target user may be used as the growth change data. Alternatively, in consideration of the average values exemplified above, growth changes may be predicted from the measurement results (that is, actual measurement values) obtained by the measurement means. Alternatively, growth changes may be predicted based on information about the target user entered by the registered user (for example, attribute information such as age and gender, height, weight, and the like), or images of the target user's body (here, the feet) (for example, images of the feet taken from various angles).

Upon acquisition of the measurement information, the server system 1100 generates comfort level variation information on each predetermined item (for example, shoes sold through an online shopping service) based on the item information of the item, the attribute information and measurement information of the target user, which indicates the variation in comfort level over time in a case where the target user wears the item. As for the attribute information and measurement information of the target user, both are not necessarily used, and either one of them may be used.

The item information includes specification information such as the name, item category, size range, material, dimensions, and weight of the item, information on the purchaser's evaluation of the item, and the like. In the case of using the evaluation information to generate the comfort level variation information, for example, information on evaluations of the item made by registered users who have registered children as wearing users whose attribute information and measurement information are similar to that of the target user, is extracted and used to generate the comfort level variation information. Specifically, in generating a comfort level graph for each size as will be described later, the shape of the parabola can be adjusted using the evaluation information to make the shape steeper or gentler.

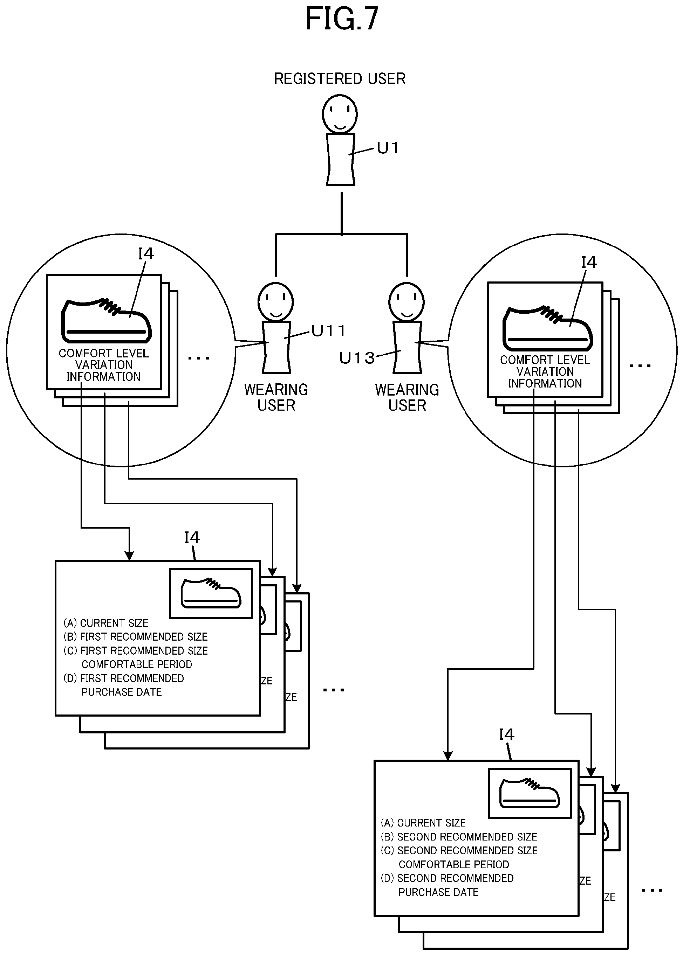

FIGS. 4, 5, and 6 are diagrams illustrating examples of comfort level variation information on a wearing user U11 (see FIG. 7) as the target user, generated for each of items (shoes) I1, I2, and I3. In the present embodiment, the comfort level variation information is generated that represents the comfort level at each time point during a predetermined target period (up to 14 months in the example of FIG. 4 and the like) starting from the measurement timing related to the measurement information of the target user (wearing user U11) (that is, the previous measurement timing when the previous measurement was performed on the wearing user U11), using values ranging from "0 (very bad)" to "100 (very good)", for example. In FIG. 4 and others, only the portions of the generated comfort level variation information where the comfort level is 50 or higher are extracted and illustrated.

Focusing on one item, when generating the comfort level variation information, the server system 1100 performs the following process for each size in accordance with the size range of the target item, for example. That is, first, based on the measurement information of the target user (here, wearing user U11), the time point (estimated best-fit time point) at which the size is considered most suitable for the target user when the target user wears the item of the size is set. Next, the comfort level at the estimated best-fit time point is set to 100, and a parabolic graph with the estimated best-fit time point as the apex is generated as a graph of the comfort level for that size. In this case, the item information is used to adjust the shape of the parabola of the graph to be generated (as to whether the parabola has a gentle slope or a steep slope). The above process is repeated for each size to generate a comfort level graph for each size, thereby obtaining the comfort level variation information.

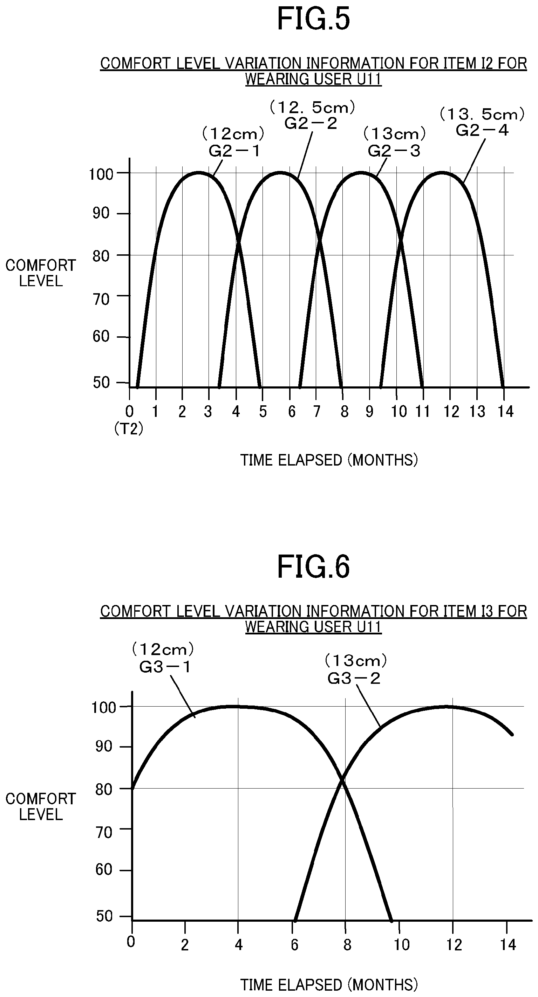

For example, FIG. 4 illustrates an example in which the comfort level variation information on the item I1 is generated, which includes a comfort level graph G1-1 in a case where the wearing user U11 wears the item I1 of 12 cm, a comfort level graph G1-2 in a case where the wearing user U11 wears the item I1 of 12.5 cm, a comfort level graph G1-3 in a case where the wearing user U11 wears the item I1 of 13 cm, and a comfort level graph G1-4 in a case where the wearing user U11 wears the item I1 of 13.5 cm. Similarly, FIG. 5 illustrates an example in which the comfort level variation information on the item I2 is generated, which includes a comfort level graph G2-1 in a case where the wearing user U11 wears the item I2 of 12 cm, a comfort level graph G2-2 in a case where the wearing user U11 wears the item I2 of 12.5 cm, a comfort level graph G2-3 in a case where the wearing user U11 wears the item I2 of 13 cm, and a comfort level graph G2-4 in a case where the wearing user U11 wears the item I2 of 13.5 cm. FIG. 6 illustrates an example in which the comfort level variation information on the item I3 is generated, which includes a comfort level graph G3-1 in a case where the wearing user U11 wears the item I3 of 12 cm, and a comfort level graph G3-2 in a case where the wearing user U11 wears the item I3 of 13 cm.

On a comparison between the item I1 in FIG. 4 and the item I2 in FIG. 5, even though the sizes are the same, if the item I2 is designed to be smaller (for example, if the item I2 is made of a material that does not stretch easily), the item I1 will be wearable comfortably for a shorter period of time than the item I2. Therefore, in generating a comfort level graph for each size, the server system 1100 adjusts the shape of the parabola to be steeper for items that are designed to be tight (for example, the item I1).

Conversely, on a comparison between items of the same size, if one item is designed to be larger (for example, if one item is made of a material that stretches easily), the item will be wearable comfortably for a longer period of time than the other item. Therefore, in generating a comfort level graph for each size, the server system 1100 adjusts the shape of the parabola to be gentler for items that are designed to be larger.

Furthermore, on a comparison between items, the size increments of one item may be larger than the size increments of the other item. For example, the size of the item I3 in FIG. 6 is in 1 cm increments, whereas the size of the item I1 in FIG. 4 and the size of the item I2 in FIG. 5 are in 0.5 cm increments. Therefore, when generating a comfort level graph for each size, the server system 1100 adjusts the shape of the parabola to be gentler for items with larger size increments than for items with smaller size increments.

The measurement information and the comfort level variation information are acquired each time a measurement related to the measurement information is made on the target user, and are updated to the latest information.

The comfort level variation information may also be generated in consideration of the target user's preferences regarding wearing items (for example, whether they like larger items or slimmer items). Specifically, for example, from the evaluation information included in the item information, information on evaluation of comfort of children who have similar preferences to the target user may be extracted and used to generate the comfort level variation information. Specifically, in generating a comfort level graph for each size, the shape of the parabola can be adjusted using the evaluation information to make the shape steeper or gentler.

### 2-2. Estimation Process

In an estimation process, based on measurement information of a target user and a wearing size of the target user wearing the item, the server system 1100 estimates a recommended purchase date of the item in a larger size than the wearing size. In the present embodiment, the server system 1100 estimates a recommended purchase date of each item using the comfort level variation information on the target user generated for each item from the measurement information of the target user. If a plurality of wearing users are associated with the registered user, estimation is performed for each wearing user by sequentially setting each wearing user as a target user.

FIG. 7 is a diagram for describing an overview of the estimation process. FIG. 7 illustrates a registered user U1 and two wearing users U11 and U13 associated with the registered user U1. In the data acquisition process described above, the comfort level variation information is generated for each item for the wearing user U11 when the wearing user U11 wears the item (see, for example, comfort level variation information in FIGS. 4 to 6), and the comfort level variation information is generated for each item for the wearing user U13 when the wearing user U13 wears the item. In the present embodiment, when the registered user U1 logs in, one wearing user (for example, wearing user U11) is set as a first target user, and the other wearing user (for example, wearing user U13) is set as a second target user. First, each item is sequentially set as an estimation target item, and, by repeating the following processing for a first target user (here, wearing user U11), a first recommended purchase date is estimated for each item for the wearing user U11.

For example, in the case illustrated in FIG. 7 where the item I4 is set as an estimation target item, the server system 1100 determines, for the estimation target item (here, item I4): (A) the current wearing size of the wearing user U11 (a size that can be worn comfortably at the current time point; hereinafter referred to as the "current size"). Further, the server system 1100 estimates: (B) a size larger than the current size (for example, a size that is one size larger) as a first recommended size; and (C) a comfortable period during which the wearing user U11 can comfortably wear the item I4 of the first recommended size as a first recommended size comfortable period. Then, based on the first recommended size comfortable period, the server system 1100 estimates: (D) a first recommended purchase date, which is a recommended purchase date of the item I4 for the wearing user U11. Namely, the first recommended purchase date is a recommended purchase date of the first recommended size that was estimated as a size that is one size larger than the current size. In other words, the first recommended size corresponds to the wearing size of the wearing user U11 for which purchase is recommended on the first recommended purchase date, which is, in the present embodiment, a size that is one size larger than the current size.

Once the first recommended purchase date is estimated for each item for the first target user, similar processing is repeated subsequently for the second target user (here, the wearing user U13) to estimate a second recommended purchase date for each item for the wearing user U13.

For example, in the case illustrated in FIG. 7 where the item I4 is set as an estimation target item, the server system 1100 determines: (A) the current size of the wearing user U13 for the estimation target item (here, item I4). Further, the server system 1100 estimates: (B) a size that is, for example, one size larger than the current size as a second recommended size; and (C) a comfortable period during which the wearing user U13 can comfortably wear the item I4 of the second recommended size as a second recommended size comfortable period. Then, based on the second recommended size comfortable period, the server system 1100 estimates: (D) a second recommended purchase date, which is a recommended purchase date of the item I4 for the wearing user U13. Namely, the second recommended purchase date is a recommended purchase date of the second recommended size that was estimated as a size that is one size larger than the current size. In other words, the second recommended size corresponds to the wearing size of the wearing user U13 for which purchase is recommended on the second recommended purchase date, which is, in the present embodiment, a size that is one size larger than the current size.

Next, a specific example of the estimation process is described with reference to the comfort level variation information in FIG. 4, with respect to a case where a first recommended purchase date of the item I1 for the wearing user U11 is estimated.

Here, as described above with reference to FIG. 4 and the like, the comfort level variation information is generated when the measurement information related to a corresponding wearing user is acquired (at the time of measurement related to the measurement information), and indicates the comfort level at each time point within a predetermined period from the measurement timing (previous measurement timing). Therefore, in the estimation process, the current time point is used as a reference timing, and a section of the comfort level variation information after the reference timing is used for the estimation. For example, immediately after measurement is made for the wearing user U11, the reference timing is a time point T11 (previous measurement timing) at which the elapsed time in FIG. 4 is 0. If the login timing of the registered user is a time point T13 that is five months after the previous measurement timing, the time point T13 that is five months later is set as the reference timing.

For example, when the reference timing is T11: (A) first, it is decided which size of the item I1 has a comfortable period within which the reference timing T11 falls, thereby determining a current size of the item I1 that can be comfortably worn by the wearing user U11 at the current time point. In the present embodiment, the comfortable period is a period that satisfies a predetermined comfort level condition. The comfort level condition can be, for example, "the comfort level in the comfort level variation information of the estimation target item being 80 or higher."

In FIG. 4, the reference timing T11 falls within the comfortable period (from the reference timing T11 to four months later) of the size (12 cm) that corresponds to the graph G1-1. Therefore, the current size is determined as this size (12 cm).

While an example has been described here in which the current size is determined from the comfort level variation information, if, for example, the item I1 has been purchased in the past and the wearing user U11 has actually been wearing the item I1, this purchased size can be determined as the wearing size.

(B) Subsequently, since a size one size larger than the current size is the size (12.5 cm) corresponding to the graph G1-2, the first recommended size is estimated as this size (12.5 cm).

(C) Subsequently, as can be seen from the graph G1-2, since the comfort level is 80 or higher in the period from 3.5 months to 7.5 months after the reference timing T11, this period is estimated as the first recommended size comfortable period.

(D) Subsequently, the first recommended purchase date is estimated based on the first recommended size comfortable period. For example, a time point T15 that is the start time point of the first recommended size comfortable period (time point 3.5 months after the reference timing T11) can be set as the first estimated purchase date. After a time point T16 at which the graph G1-1 and the graph G1-2 intersect, the comfort level of the first recommended size becomes greater than the comfort level of the current size. This time point T16 at the intersection can be set as the first recommended purchase date. Alternatively, a time point earlier than the start time point of the first recommended size comfortable period can be set as the first recommended purchase date. How far in advance the first recommended purchase date is set can be determined as appropriate. For example, it can be set to one month earlier, or ten days earlier. In the case where it is set to one month earlier, a time point one month earlier than the start time point (time point 2.5 months after the reference timing T11) is estimated as the first recommended purchase date.

Next, when the reference timing is T13: (A) first, since the reference timing T13 falls within the comfortable period of the size (12.5 cm) corresponding to the graph G1-2, the current size is determined as this size (12.5 cm).

(B) Subsequently, since a size one size larger than the current size is the size (13 cm) corresponding to the graph G1-3, the first recommended size is estimated as this size (13 cm).

(C) Subsequently, as can be seen from the graph G1-3, since the comfort level is 80 or higher in the period from two months after the reference timing T13 (seven months after the previous measurement) to six months after the reference timing T13 (eleven months after the previous measurement), this period is estimated as the first recommended size comfortable period.

(D) Subsequently, the first recommended purchase date is estimated based on the first recommended size comfortable period. For example, the start of the first recommended size comfortable period (time point 2 months after the reference timing T13) can be estimated as the first recommended purchase date, or a time point a predetermined number of days before the start time point can be set as the recommended purchase date.

Sometimes, in determining the current size in (A) with reference to the comfort level variation information, the reference timing may not fall within the comfortable period of any size. For example, this is the case where the time point T2 in FIG. 5, at which the elapsed period is 0, is the reference timing. FIG. 5 illustrates an example where the size lineup of the item I2 starts from 12 cm, and at the time point T2, the size of the item I2, 12 cm, is still too large for the wearing user U11 to wear. In such a case, the current size is not determined in (A), and the size that the wearing user U11 will be able to wear first (smallest size, which is 12 cm here) can be set as the first recommended size in (B).

The threshold for the comfort level that serves as the comfort level condition is not limited to the exemplified value of 80 and may be set for each registered user. If a registered user wishes to purchase an item that can be worn for as long as possible even though there is a slight difference in size between the target user's feet and the item, the threshold for the comfort level may be set to 70, for example. If priority is placed on the ease of movement when the registered user wears the item, the threshold for the comfort level can be set to a high value, such as 90 or 95, for example.

Settings for each registered user, such as whether the user prioritizes the item wearable for as long as possible or whether the user prioritizes ease of movement even if the item needs to be replaced more frequently, can be realized by accepting input from the registered user in a questionnaire in advance, for example.

Furthermore, a threshold for the comfort level that serves as a comfort level condition may be set in advance according to the category of the item. For example, if the category of the item I1 is "sports shoes", the threshold for the comfort level may be set to 95, with an emphasis on the user's ease of movement when wearing the shoes.

Furthermore, a threshold for the comfort level that serves as a comfort level condition may be set according to the items worn by the target user in the past. For example, if the item is replaced (with a larger-sized one) when the comfort level falls below 90, the threshold for the comfort level may be set to 90. By obtaining the date and time when the item was replaced from the purchase history data 535 of the registered user (see FIG. 16), the threshold for the comfort level at the time of replacement can be determined.

Furthermore, setting of the threshold value for the comfort level (that is, setting of the comfort level condition) may be performed by accepting an input operation of the threshold from the registered user.

### 2-3. Recommendation Control Process

In the recommendation control process, the server system 1100 performs recommended date presentation control based on a recommended purchase date estimated in the estimation process, as display control for display on the terminal apparatus 1500. In the present embodiment, the server system 1100 displays product information of an item on the terminal apparatus 1500 of a registered user who has logged in, according to the registered user's operation of viewing the item. Then, the server system 1100 performs recommended date presentation control, in which a display element or an identifier is displayed, indicating a recommended purchase date estimated for the wearing user regarding the item. Hereinafter, examples of recommended date presentation control (Examples 1 to 5) will be described, assuming that the registered user U in FIG. 7 has performed an operation of viewing an item I4.

### (Example 1)

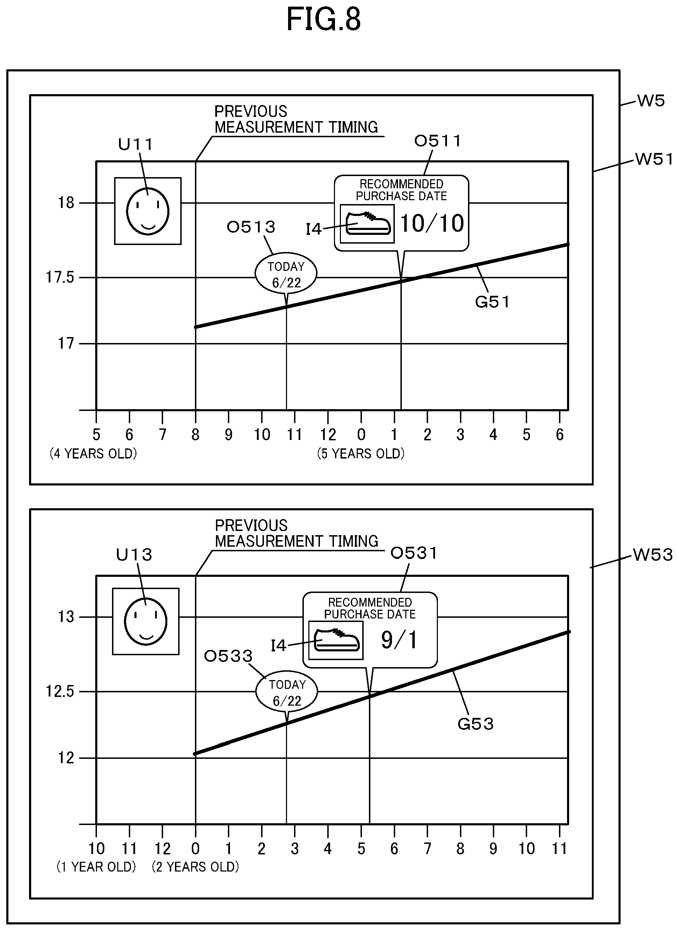

FIG. 8 is a diagram illustrating an example of a recommendation display screen displayed on the terminal apparatus 1500 by the recommended date presentation control in this example. As illustrated in FIG. 8, the recommendation display screen W5 in this example includes a first display area W51 for a first target user (for example, wearing user U11), and a second display area W53 for a second target user (for example, wearing user U13).

The first display area W51 displays: a first predicted change graph G51 indicating predicted changes of the measurement information based on measurement information of the wearing user U11 who is the first target user; and a first instruction element O511 indicating a point on the first predicted change graph G51 corresponding to the first recommended purchase date.

The first predicted change graph G51 shows predicted changes in foot size of the wearing user U11 since a previous measurement timing, with the horizontal axis representing age (in months) and the vertical axis representing foot size. In the present embodiment, the server system 1100 displays growth change data of the wearing user U11 generated as measurement information (growth change data 529 in FIG. 16) in the form of a graph, i.e., as the first predicted change graph G51, in the first display area W51 of the recommendation display screen W5. The server system 1100 also displays the first instruction element O511 that indicates the first recommended purchase date of the item I4 relating to the wearing user U11, as well as an instruction element O513 that indicates the current time point, on the first predicted change graph G51.

The first display area W51 may be configured to additionally display the current size, a first recommended size, and a first recommended size comfortable period of the item I4 relating to the wearing user U11. If this is the case, for example, the first recommended size comfortable period may be displayed by changing a line type or color of a graph section corresponding to a corresponding period from other graph sections on the first predicted change graph G51. The current size and the first recommended size may be displayed in their respective fields within the first display area W51, for example.

The second display area W53 displays: a second predicted change graph G53 indicating predicted changes of the measurement information based on measurement information of the wearing user U13 who is the second target user; and a second instruction element O531 indicating a point on the second predicted change graph G53 corresponding to the second recommended purchase date.

The second predicted change graph G53 shows predicted changes in foot size of the wearing user U13 since a previous measurement timing, with the horizontal axis representing age (in months) and the vertical axis representing foot size. In the present embodiment, the server system 1100 displays growth change data of the wearing user U13 generated as measurement information in the form of a graph, i.e., as the second predicted change graph G53, in the second display area W53 of the recommendation display screen W5. The server system 1100 also displays the second instruction element O531 that indicates the second recommended purchase date of the item I4 relating to the wearing user U13, as well as an instruction element O533 that indicates the current time point, on the second predicted change graph G53.

The second display area W53 may be configured to also display the current size, a second recommended size, and a second recommended size comfortable period of the item I4 relating to the wearing user U13, similarly to the first display area W51.

Moreover, the recommendation display screen (here, recommendation display screen W5) can also be configured to display a next measurement date of the first target user (here, wearing user U11) and a next measurement date of the second target user (here, wearing user U13). For example, a next scheduled measurement date of the wearing user U11 may be displayed in the first display area W51, and a next scheduled measurement date of the wearing user U13 may be displayed in the second display area W53.

If measurements related to the measurement information have not been performed for a wearing user for a long period of time and the measurement information becomes outdated, the comfort level graph indicated by the comfort level variation information will no longer match the actual foot size of the wearing user, increasing the risk of a decrease in the accuracy of the first recommended size and second recommended size estimated based on the comfort level variation information. In order to maintain estimation accuracy, each wearing user needs to be measured regularly. A next scheduled measurement date refers to a scheduled next measurement timing that is set for each wearing user in order to maintain the estimation accuracy. For example, a next scheduled measurement date may be set to a timing after a predetermined period has elapsed from a previous measurement timing of the wearing user. The predetermined period may be set as appropriate, for example, to three months or six months.

Specifically, a next scheduled measurement date of the wearing user U11 is displayed, for example, as an instruction element indicating a point on the first predicted change graph G51 corresponding to the next scheduled measurement date in the first display area W51. Similarly, a next scheduled measurement date of the wearing user U13 is displayed, for example, as an instruction element indicating a point on the second predicted change graph G53 corresponding to the next scheduled measurement date in the second display area W53.

### (Example 2)

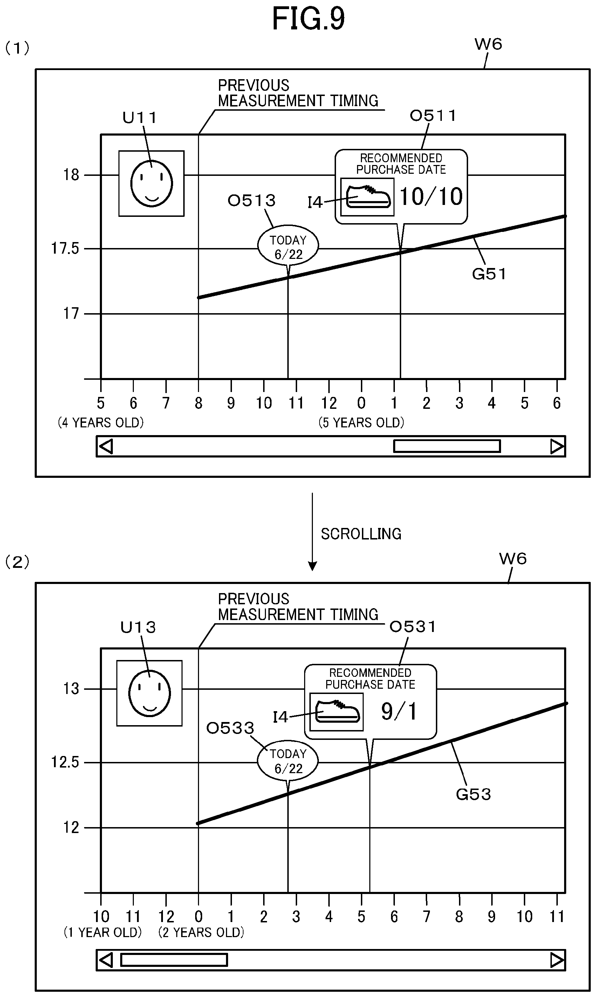

FIG. 9 is a diagram illustrating an example of a recommendation display screen displayed on the terminal apparatus 1500 by the recommended date presentation control in this example. In this example, the recommendation display screen W6 displays a first predicted change graph G51 relating to the first target user (wearing user U11), and a second predicted change graph G53 relating to the second target user (wearing user U13), the graphs sharing the horizontal axis.

Namely, the upper part (1) of FIG. 9 illustrates a state in which the horizontal axis is scrolled to the age in months of the wearing user U11, so that the first predicted change graph G51 and the first instruction element O511 on the first predicted change graph G51 are displayed. In the state illustrated in FIG. 9(1), scrolling the horizontal axis to the age in months of the wearing user U13 displays the second predicted change graph G53 and the second instruction element O531, as illustrated in the lower part (2) of FIG. 9.

The recommendation display screen W6 of this example may also be configured to display the current size, the first recommended size, and the first recommended size comfortable period of the item I4 relating to the wearing user U11, near the display of the first predicted change graph G51 and the like (in FIG. 9(1)). In addition, the current size, the second recommended size, the second recommended size comfortable period, and the second recommended purchase date of the item I4 relating to the wearing user U13 may be displayed. This allows the user to grasp the information relating to the wearing user U13 without scrolling to see the display in FIG. 9(2). Similarly, the current size, the second recommended size, and the second recommended size comfortable period of the item I4 relating to the wearing user U13 may be displayed near the display of the second predicted change graph G53 and the like (in FIG. 9(2)). In addition, the current size, the first recommended size, the first recommended size comfortable period, and the first recommended purchase date of the item I4 relating to the wearing user U11 may be displayed. This allows the user to grasp the information relating to the wearing user U11 without scrolling to see the display in FIG. 9(1).

Furthermore, when displaying information relating to the wearing user U11 and information relating to the wearing user U13, it is desirable to display the information of both users in a distinguishable manner. For example, each information may be displayed in a different color, or with a different font size. Alternatively, the display field of each information may be given a different background, or the frame shape of the display field may be changed to make the display distinguishable.

### (Example 3)

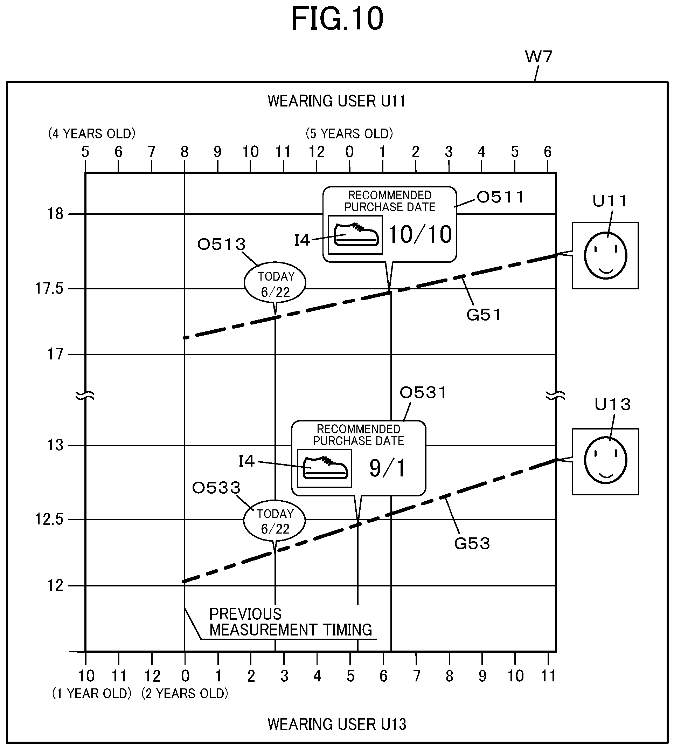

FIG. 10 is a diagram illustrating an example of a recommendation display screen displayed on the terminal apparatus 1500 by the recommended date presentation control in this example. As illustrated in FIG. 10, the recommendation display screen W7 of this example displays a first predicted change graph G51 and a second predicted change graph G53 as a composed chart with two horizontal axes. In the example of FIG. 10, the first horizontal axis (upper axis) represents the age (in months) of the wearing user U11, and the first predicted change graph G51 and the first instruction element O511 on the first predicted change graph G51 are shown with respect to the first horizontal axis. The second horizontal axis (lower axis) represents the age (in months) of the wearing user U13, and the second predicted change graph G53 and the second instruction element O531 on the second predicted change graph G53 are shown with respect to the second horizontal axis. The first predicted change graph G51 with respect to the first horizontal axis is shown with a one-dot chain line, and the second predicted change graph G53 with respect to the second horizontal axis is shown with a two-dot chain line. The vertical axis (foot size) is shared.

The recommendation display screen W7 of this example may also be configured to display the current size, the first recommended size, and the first recommended size comfortable period of the item I4 relating to the wearing user U11, and the current size, the second recommended size, and the second recommended size comfortable period of the item I4 relating to the wearing user U13.

### (Example 4)

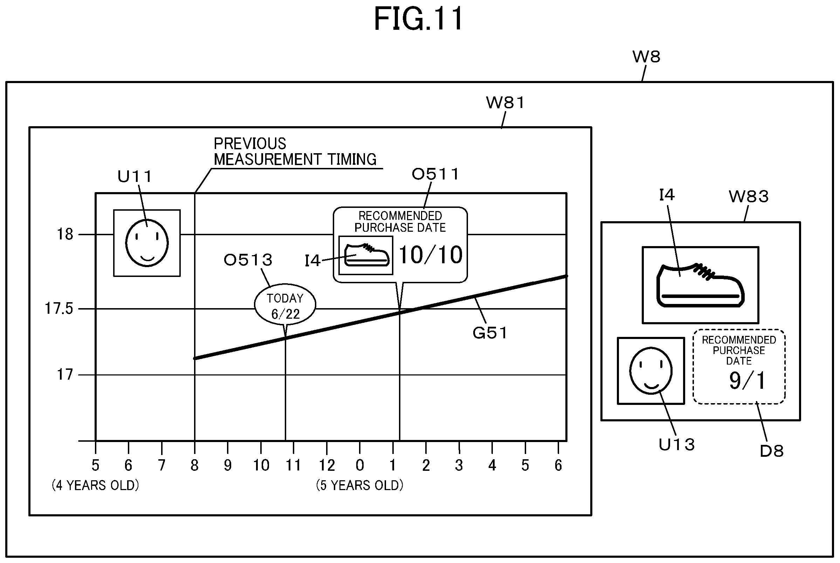

FIG. 11 is a diagram illustrating an example of a recommendation display screen displayed on the terminal apparatus 1500 by the recommended date presentation control in this example. As illustrated in FIG. 11, the recommendation display screen W8 in this example includes a first display area W81 for a first target user (for example, wearing user U11), and a second display area W83 for a second target user (for example, wearing user U13).

In the first display area W81, the horizontal axis represents age (in months) and the vertical axis represents foot size, and a first predicted change graph G51 relating to the wearing user U11, who is the first target user, as well as a first instruction element O511 indicating a recommended purchase date (first recommended purchase date) of the item I4 on the first predicted change graph G51, are displayed. For example, the second display area W83 displays a recommended purchase date (second recommended purchase date) D8 estimated for the wearing user U13 regarding the same item I4.

The recommendation display screen W8 of this example may also be configured to display the current size, the first recommended size, and the first recommended size comfortable period of the item I4 relating to the wearing user U11 in the first display area W81. The second display area W83 may display the current size, the second recommended size, and the second recommended size comfortable period of the item I4 relating to the wearing user U13.

Furthermore, the display target of the first display area W81 (wearing user U11 in the example of FIG. 11) and the display target of the second display area W83 (wearing user U13 in the example of FIG. 11) may be displayed in an interchangeable manner. Specifically, for example, a switch button may be placed within the recommendation display screen W8 to receive a display switching operation by the user. Upon receiving a selection operation on the switch button on the terminal apparatus 1500, the display in the first display area W81 may be changed to show a second predicted change graph relating to a wearing user U21, and a second instruction element indicating a recommended purchase date (second recommended purchase date) of the item I4 on the second predicted change graph, and at the same time, the display in the second display area W83 may be changed to show a recommended purchase date (first recommended purchase date) of the item I4 relating to the wearing user U11.

Furthermore, the configuration is not limited to one that always displays the second display area W83; the second display area may be configured to be displayed when a predetermined condition is met. For example, the second display area W83 may be displayed when a recommended purchase date (second recommended purchase date) estimated for the wearing user U13 is within a predetermined period from a recommended purchase date (first recommended purchase date) estimated for the wearing user U11. Conversely, the second display area W83 may be displayed when a recommended purchase date (second recommended purchase date) estimated for the wearing user U13 is not within a predetermined period from a recommended purchase date (first recommended purchase date) estimated for the wearing user U11. The length of the predetermined period may be set as appropriate.

### (Example 5)

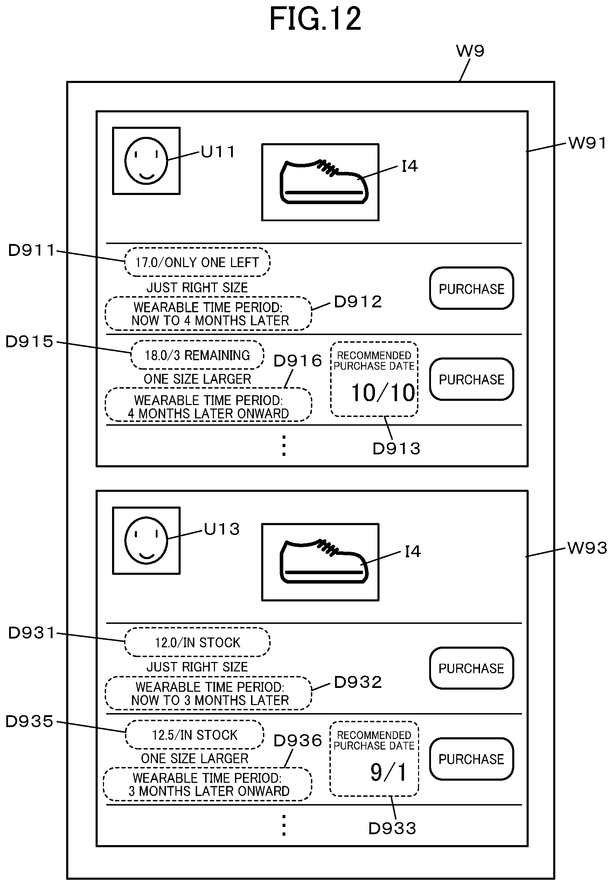

FIG. 12 is a diagram illustrating an example of a recommendation display screen displayed on the terminal apparatus 1500 by the recommended date presentation control in this example. As illustrated in FIG. 12, the recommendation display screen W9 in this example includes a first display area W91 for a first target user (for example, wearing user U11), and a second display area W93 for a second target user (for example, wearing user U13); it is an example of a screen that simultaneously displays a first recommended size comfortable period D916 relating to the wearing user U11 and a second recommended size comfortable period D936 relating to the wearing user U13.

Specifically, the first display area W91 displays the current size D911 of the wearing user U11, the first recommended purchase date D913, and the first recommended size (wearing size of the wearing user U11 for which purchase is recommended on the first recommended purchase date) D915. Furthermore, a comfortable period D912 during which the current size D911 is comfortably wearable for the wearing user U11 is displayed in association with the current size D911. A first recommended size comfortable period D916 during which the first recommended size D915 is comfortably wearable for the wearing user U11 is displayed in association with the first recommended size D915.

The second display area W93 displays the current size D931 of the wearing user U13, the first recommended purchase date D933, and the second recommended size (wearing size of the wearing user U13 for which purchase is recommended on the second recommended purchase date) D935. Furthermore, a comfortable period D932 during which the current size D931 is comfortably wearable for the wearing user U13 is displayed in association with the current size D931. A second recommended size comfortable period D936 during which the second recommended size D935 is comfortably wearable for the wearing user U13 is displayed in association with the second recommended size D935.

Next, examples of the recommendation display screen (Example 6 and Example 7) when a registered user logs in will be described, where the target users are a first wearing user and a second wearing user associated with the registered user and referred to as "Taro" and "Hanako," respectively.

### (Example 6)

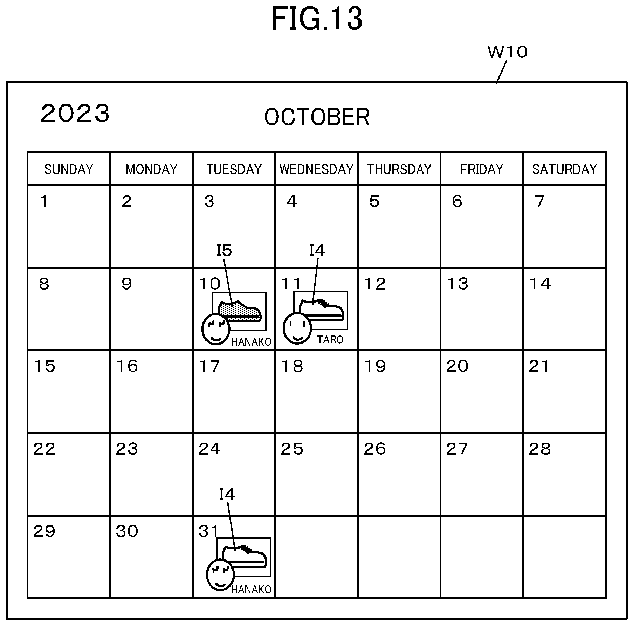

FIG. 13 is a diagram illustrating an example of a recommendation display screen displayed on the terminal apparatus 1500 by the recommended date presentation control in this example. As illustrated in FIG. 13, the recommendation display screen W10 of this example displays marks (identifiers) on corresponding dates of a predetermined calendar display, to indicate a recommended purchase date (first recommended purchase date; in FIG. 13, October 11) of an item I4 for the wearing user "Taro" or the first target user, a recommended purchase date (second recommended purchase date; in FIG. 13, October 31) of the item I4 for the wearing user "Hanako" or the second target user, and a recommended purchase date (second recommended purchase date; in FIG. 13, October 10) of an item I5 for the second target user "Hanako."

The items whose recommended purchase date is to be displayed on the calendar may be set as appropriate. For example, a recommended purchase date of a first recommended size of shoes sold through an online shopping service may be displayed if the shoes of the first recommended size are in stock. If an item has been purchased in the past, a recommended purchase date of this item may be displayed. Alternatively, if the registered user has registered a category of favorite items (for example, sports shoes or the like) with respect to a wearing user, an item in this category may be displayed.

The recommendation display screens shown in Examples 1 to 5 may be provided with a calendar display menu, and the calendar display shown in FIG. 13 may be displayed when the menu is selected by the registered user.

### (Example 7)

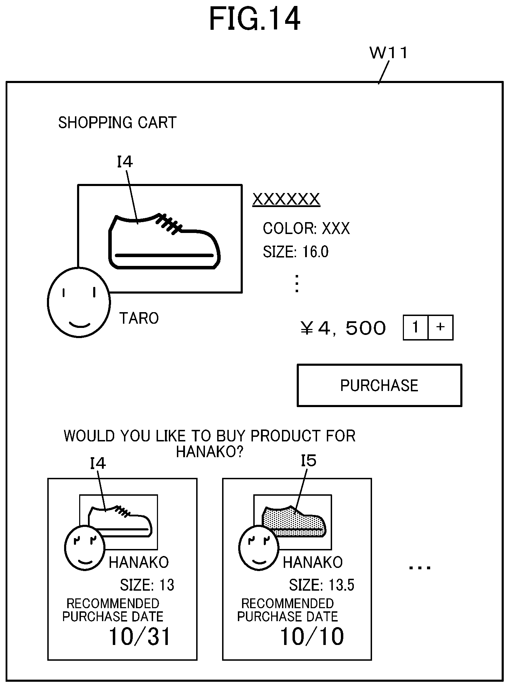

FIG. 14 is a diagram illustrating an example of a recommendation display screen displayed on the terminal apparatus 1500 by the recommended date presentation control in this example. In this example, the timing at which an item is placed in the cart is set as the purchase timing. Therefore, the recommendation display screen W11 in FIG. 14 is displayed as a shopping cart screen. More specifically, the recommendation display screen W11 displays product information such as size and price of an item I4 for the wearing user "Taro" placed in the cart by the registered user, prompting the user to confirm purchase.

Furthermore, the recommendation display screen W11 of this example displays a recommended purchase date of a predetermined item (in W11, item I4 and item I5) for another wearing user (in this example, "Hanako"), and a recommended size associated with this recommended purchase date. The screen may further display a purchase button (button for placing an item into the cart) for each item. The item for which a recommended purchase date and the like are to be displayed may be selected, for example, based on the purchase timing. Specifically, an item may be selected if its recommended purchase date is within a period from the present date until a predetermined number of days elapses (for example, within one month, or within 15 days). If there are no items, or if there are only few items, whose recommended purchase date is within such a period, the current size of the item if it is to be worn by the other wearing user (here, "Hanako") may be displayed in addition. Other features of the display may be set as appropriate similarly to Example 6.

### [Functional Configuration]

### 1. Server System

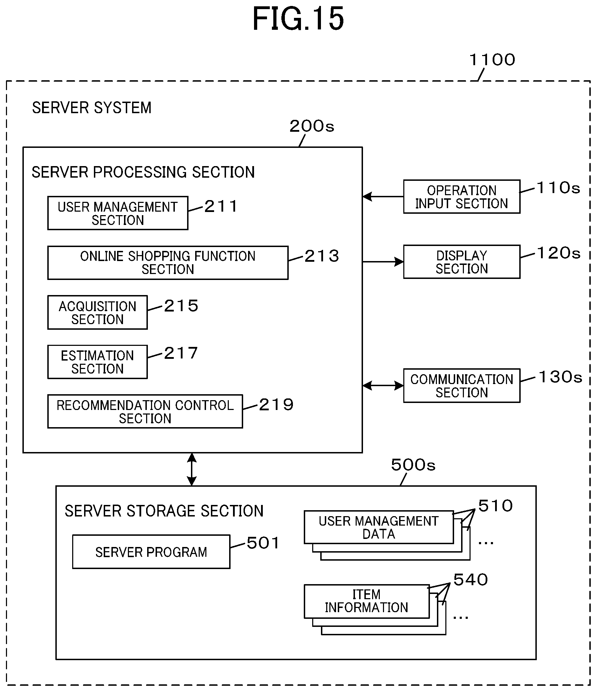

FIG. 15 is a block diagram illustrating a functional configuration example of the server system 1100. As illustrated in FIG. 15, the server system 1100 of the present embodiment includes an operation input section 110s, a display section 120s, a communication section 130s, a server processing section 200s, and a server storage section 500s.

The operation input section 110s is implemented by an input device such as a keyboard, a mouse, or a touch panel, for example, and outputs an operation signal according to the operation input to the server processing section 200s. Referring to FIG. 1, the keyboard 1106 and the touch panel 1108 correspond to this.

The display section 120s is implemented by a display device such as a liquid crystal display (LCD) or a touch panel, for example, and provides various types of display in response to display signals from the server processing section 200s. Referring to FIG. 1, the touch panel 1108 corresponds to this.

The communication section 130s is implemented by a wired or wireless communication device, and connects to the network 9 to communicate with an external device (for example, the terminal apparatus 1500). For example, the communication section 130s can be implemented by a wireless communication device, a modem, a terminal adapter (TA), a jack for a wired communication cable, a control circuit, or the like. Referring to FIG. 1, the communication device 1153 corresponds to this.

The server processing section 200s can be implemented by a processor, which is an arithmetic circuit such as a CPU, GPU, ASIC, and FPGA, and electronic components such as IC memory, for example, and controls the input and output of data between each part of the device, including the operation input section 110s and the server storage section 500s. The server processing section 200s performs various calculation processes based on predetermined programs and data, operation input signals from the operation input section 110s, data received from the terminal apparatus 1500, and the like to comprehensively control the operations of the server system 1100. Referring to FIG. 1, the control board 1150 and the CPU 1151 correspond to this.

The server processing section 200s also includes a user management section 211, an online shopping function section 213, an acquisition section 215, an estimation section 217, and a recommendation control section 219.

The user management section 211 executes user registration processing and data management processing, and manages data linked to registered user IDs. In the present embodiment, the user management section 211 manages, for each registered user, user data such as association of the registered user with the wearing user, attribute information, measurement information, and comfort level variation information about the wearing user acquired as needed. Therefore, the user management section 211 can also be called a user data management section.

The online shopping function section 213 performs processing related to the provision of online shopping services. Registered users can use the online shopping function implemented by the processing here to purchase items that can be worn by the user (in the present embodiment, shoes to be worn by the wearing user). In the present embodiment, the online shopping function section 213 displays product information of items on the terminal apparatus 1500 according to a registered user's operation of viewing items when the registered user logs in.

The acquisition section 215 is a function section that performs a data acquisition process, and acquires user data of a target user who is a wearing user associated with a registered user. To acquire user data, a separate measurement means is used to measure the body part (in the present embodiment, the foot) where the item (in the present embodiment, shoes) is worn. The acquisition section 215 acquires measurement information, including the shape data of the wearing part (in the present embodiment, the foot) and growth change data, and generates comfort level variation information and the like based on the results of measurement by the measurement means.

The estimation section 217 is a function section that performs an estimation process. In the present embodiment, when the registered user logs in, the estimation section 217 estimates, for each target user, a recommended purchase date of each item, each target user being a wearing user associated with the registered user.

The recommendation control section 219 is a function section that performs a recommendation control process. In the present embodiment, the online shopping function section 213 displays product information of an item on the terminal apparatus 1500 of the registered user who has logged in. The recommendation control section 219 controls the presentation to the registered user, for example, by displaying a recommended purchase date of the item for each target user on the terminal apparatus 1500.

The server storage section 500s stores programs for operating the server system 1100 and implementing the various functions of the server system 1100, data used during execution of these programs, and the like. These are stored in advance or temporarily stored each time processing is performed. For example, the server storage section 500s can be implemented by IC memory such as RAM or ROM, magnetic disks such as hard disks, optical disks such as CD-ROMs or DVDs, or the like. Referring to FIG. 1, the IC memory 1152 and the storage 1140 correspond to this.

The server storage section 500s also stores a server program 501, user management data 510, and item information 540.

The server program 501 is a program that causes the server processing section 200s to function as the user management section 211, the online shopping function section 213, the acquisition section 215, the estimation section 217, and the recommendation control section 219.

The user management data 510 is prepared for each registered user and stores various data for management purposes related to the provision of online shopping services in association with the registered user ID. Specifically, as illustrated in FIG. 16, one set of user management data 510 includes a registered user ID 511 of the registered user, a registered user name 513, wearing user data 520, and purchase history data 535 of items such as shoes purchased by the registered user.

The wearing user data 520 is prepared for each wearing user associated with the registered user. One set of wearing user data 520 is associated with a wearing user ID 521 and includes a wearing user name 522, attribute information 523, measurement information 525, measurement date and time (previous measurement timing) 531 related to the measurement information 525, and comfort level variation information 533 (see FIGS. 4 to 6) for each item (in the present embodiment, shoes). The measurement information 525 includes shape data 527 of the wearing part (in the present embodiment, the foot) and growth change data 529 of the wearing part.

The item information 540 is prepared for each item and stores various data related to the item. For example, the item information 540 includes various types of specification information and evaluation information used to generate the comfort level variation information 533 for the item, as well as information to be displayed on the terminal apparatus 1500 as product information, such as price, product images, and availability.

### 2. Terminal Apparatus

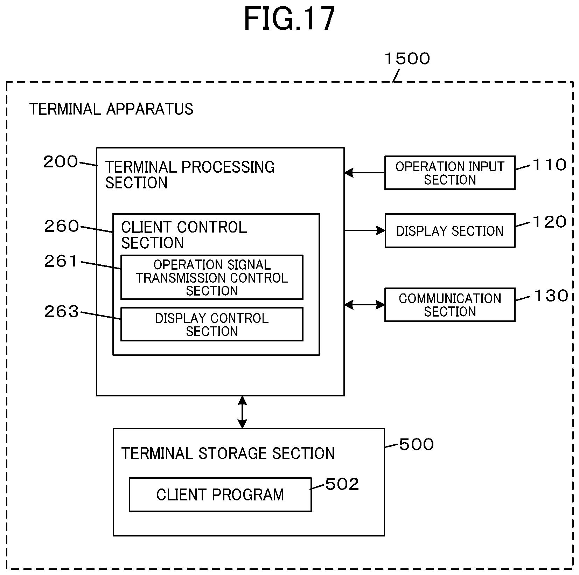

FIG. 17 is a functional block diagram illustrating a functional configuration example of the terminal apparatus 1500. As illustrated in FIG. 17, the terminal apparatus 1500 includes an operation input section 110, a display section 120, a communication section 130, a terminal processing section 200, and a terminal storage section 500.

The operation input section 110 outputs, to the terminal processing section 200, operation input signals corresponding to various operation inputs made by the user. For example, the operation input section 110 can be implemented by a keyboard, mouse, push switch, joystick, touchpad, trackball, acceleration sensor, gyro, or the like. Referring to FIG. 2, the directional input key 1502, the home key 1504, and the touch panel 1506 correspond to this.

The display section 120 is implemented by a display device such as a liquid crystal display (LCD) and a touch panel, for example, and provides various types of display in response to display signals from the terminal processing section 200. Referring to FIG. 2, the touch panel 1506 corresponds to this.

The communication section 130 is implemented by a wired or wireless communication device, and connects to the network 9 to communicate with an external device (for example, the server system 1100). The communication section 130 is implemented by a wireless communication device, a modem, a TA, a jack for a wired communication cable, a control circuit, and the like. Referring to FIG. 2, the wireless communication module 1553 corresponds to this.

The terminal processing section 200 can be implemented by a processor, which is an arithmetic circuit such as a CPU, GPU, ASIC, and FPGA, and electronic components such as IC memory, for example, and controls the input and output of data between each part of the device, including the operation input section 110 and the terminal storage section 500. The terminal processing section 200 then performs various calculation processes based on predetermined programs and data, operation input signals from the operation input section 110, data received from the server system 1100, and the like to comprehensively control the operations of the terminal apparatus 1500. Referring to FIG. 2, the control board 1550 and the CPU 1551 correspond to this.

The terminal processing section 200 also includes a client control section 260. The client control section 260 performs various controls for causing the terminal apparatus 1500 to function as a Man-Machine Interface (MMIF). The client control section 260 includes an operation signal transmission control section 261 and a display control section 263.

The operation signal transmission control section 261 performs processing for transmitting various data and request information to the server system 1100 in response to an operation input to the operation input section 110.

The display control section 263 performs control to display the recommendation display screen and the like described with reference to FIGS. 8 to 14 on the display section 120, based on the data received from the server system 1100.

The terminal storage section 500 stores programs for operating the terminal apparatus 1500 and implementing the functions of the terminal apparatus 1500, data used during execution of these programs, and the like. These are stored in advance or temporarily stored each time processing is performed. For example, the terminal storage section 500 can be implemented by IC memory such as RAM or ROM, magnetic disks such as hard disks, optical disks such as CD-ROMs or DVDs, or the like. In the example of FIG. 2, the IC memory 1552 mounted on the control board 1550 corresponds to this.

The terminal storage section 500 also stores a client program 502 (application program) for causing the terminal apparatus 1500 to function as the client control section 260.

### [Flow of Processing]

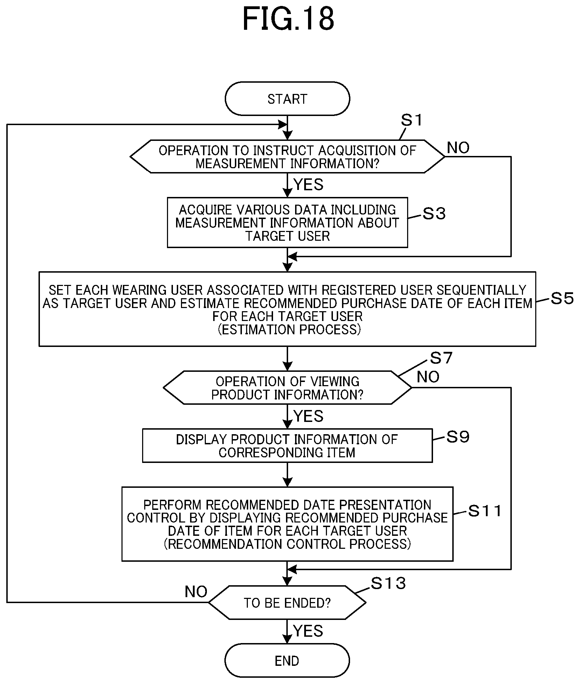

FIG. 18 is a flowchart illustrating a flow of processing in the server system 1100. The processing described here is implemented by the server processing section 200s reading and executing the server program 501.

In the present embodiment, the server processing section 200s accepts an operation of instructing acquisition of measurement information on the terminal apparatus 1500 of a logged-in registered user. If the operation on the terminal apparatus 1500 is detected (step S1: YES), the acquisition section 215 executes a data acquisition process to acquire various data including measurement information about the target user (step S3). The acquisition section 215 sets and updates, based on the acquired data, the attribute information 523, the measurement information 525 (shape data 527 of a wearing part and growth change data 529), and the comfort level variation information 533 of the wearing user data 520 (see FIG. 16) relating to the target user.

When the registered user logs in, the estimation section 217 performs the estimation process, and sets wearing users associated with the registered user sequentially as the target user, and estimates a recommended purchase date of each item for each target user (step S5).

When the online shopping function section 213 detects an operation of viewing product information by the registered user (step S7: YES), the product information of the corresponding item is displayed on the terminal apparatus 1500 (step S9). The recommendation control section 219 performs a recommendation control process and performs recommended date presentation control, in which the recommended purchase dates estimated for each target user in step S5 for the item are displayed on the terminal apparatus 1500 (step S11). For example, as described with reference to FIG. 8 and the like, the recommendation control section 219 performs recommended date presentation control, by displaying: a first predicted change graph, which indicates predicted changes of the measurement information based on measurement information of a first target user, and a first instruction element indicating a point on the first predicted change graph corresponding to a first recommended purchase date; and a second predicted change graph, which indicates predicted changes of the measurement information based on measurement information of a second target user, and a second instruction element indicating a point on the second predicted change graph corresponding to a second recommended purchase date, on the terminal apparatus 1500 of the registered user.

In step S13, it is decided whether to end the process, and if the process is not to be ended (step S13: NO), the process returns to step S1 and the above-described processing is repeated.

As described above, according to the present embodiment, when a registered user logs in, a recommended purchase date is estimated for each wearing user associated with the registered user, of a size that is larger than the wearing size of the wearing user, and the estimated recommended purchase date for each wearing user is displayed on the terminal apparatus 1500 and presented to the registered user. This allows presentation of information indicating a recommended purchase date of a size that is larger than the wearing size of the wearing user who wears the item, as a first recommended size.

In presenting the information, for example, a predicted change graph, which is growth change data of each wearing user in the form of a graph, is displayed on the terminal apparatus 1500 of the registered user, with a point corresponding to the recommended purchase date indicated on the predicted change graph. For example, as described with reference to FIG. 8 and the like, when two wearing users are associated with the registered user, it is possible to display a first predicted change graph G51 relating to a wearing user U11 who is a first target user, and a first instruction element O511 indicating a recommended purchase date (first recommended purchase date) of an item I4; and a second predicted change graph G53 relating to a wearing user U13 who is a second target user, and a second instruction element O531 indicating a recommended purchase date (second recommended purchase date) of the item I4, on the terminal apparatus 1500.

Note that the modes to which the present invention is applicable are not limited to the foregoing embodiments, and the components can be added, omitted, or changed as appropriate.

### [Modification Example 1]

For example, in the embodiment described above, a size that is one size larger than the current size is set as a recommended size (first recommended size or second recommended size), and a recommended purchase date (first recommended purchase date or second recommended purchase date) is estimated. Instead, if the item of the recommended size is not purchased even after the recommended purchase date already presented to the registered user has passed, the recommended size may be kept unchanged until the comfort level of the recommended size reaches 100, and the recommended purchase date may be set to the date on which the item is viewed.

One case in which a wearing user U11 is set as the first target user will be described with reference to the example of FIG. 4. For example, when the reference timing is T11, as described in the embodiment above, the current size is estimated as the size (12 cm) corresponding to the graph G1-1, and the first recommended size as the size (12.5 cm) corresponding to the graph G1-2. The start time point T15, for example, of the first recommended size comfortable period relating to the first recommended size (12.5 cm) is set as the first recommended purchase date, and presented to the registered user by the displaying of the recommendation display screen relating to the item I1 in FIG. 8 and the like.

After the presentation, if the registered user performs an operation of viewing the item I1 at a time point after the reference timing has passed T15 (for example, time point T17), the process branches according to whether or not the item I1 of the previously presented first recommended size (12.5 cm) has been purchased by the registered user. Namely, if the item I1 of the previously presented first recommended size (12.5 cm) has been purchased, then the time point T17 is set as the reference timing, and, in the manner described in the embodiment above, the current size is estimated as the size (12.5 cm) corresponding to the graph G1-2, and the first recommended size is estimated as the size (13 cm) corresponding to the graph G1-3. Then, the first recommended purchase date is estimated based on the start of the first recommended size comfortable period of the first recommended size (13 cm). On the other hand, if the item I1 of the previously presented first recommended size (12.5 cm) has not been purchased, the first recommended size to be presented this time is unchanged from the previously presented first recommended size (12.5 cm) until a time point when the comfort level of the first recommended size (12.5 cm) reaches 100, and the first recommended purchase date is set to the date of viewing. When the item I1 of the previously presented first recommended size (12.5 cm) is not purchased even after a time point at which the comfort level has reached 100 is passed (for example, time point T18), this time point T18 is set as the reference timing, and, in the manner described in the embodiment above, the current size (12.5 cm) and the first recommended size (13 cm) are estimated, and the first recommended purchase date is estimated based on the start of the first recommended size comfortable period of the first recommended size (13 cm).

### [Modification Example 2]

In the embodiment described above, one example was described in which comfort level variation information 533 (see FIG. 4 to FIG. 6) is set in advance for each item (shoes sold through an online shopping service) for each wearing user associated with the registered user. Instead, the comfort level variation information may be generated for one specific item for each wearing user, and the generated comfort level variation information may be used as the comfort level variation information of the corresponding wearing user.

In this case, when the item has been viewed, a first recommended size and a first comfortable period, and a second recommended size and a second comfortable period are estimated using the comfort level variation information relating to the wearing user. The item for which the comfort level variation information is to be generated may be determined, for example, based on a separately received operation of registering a favorite item of the wearing user.

### [Modification Example 3]

Another possible configuration is to separately set and present a recommended purchase date based on a bargain sale period or a coupon issue date (hereinafter referred to as "secondary recommended purchase date") for each of the first target user and the second target user. Namely, if a bargain sale or issuance of coupons is scheduled within a predetermined period before and after the first recommended purchase date (for example, within one month before and after the first recommended purchase date), these scheduled dates are set as the secondary recommended purchase dates of the first recommended purchase date. Secondary recommended purchase dates are set similarly for the second recommended purchase date.

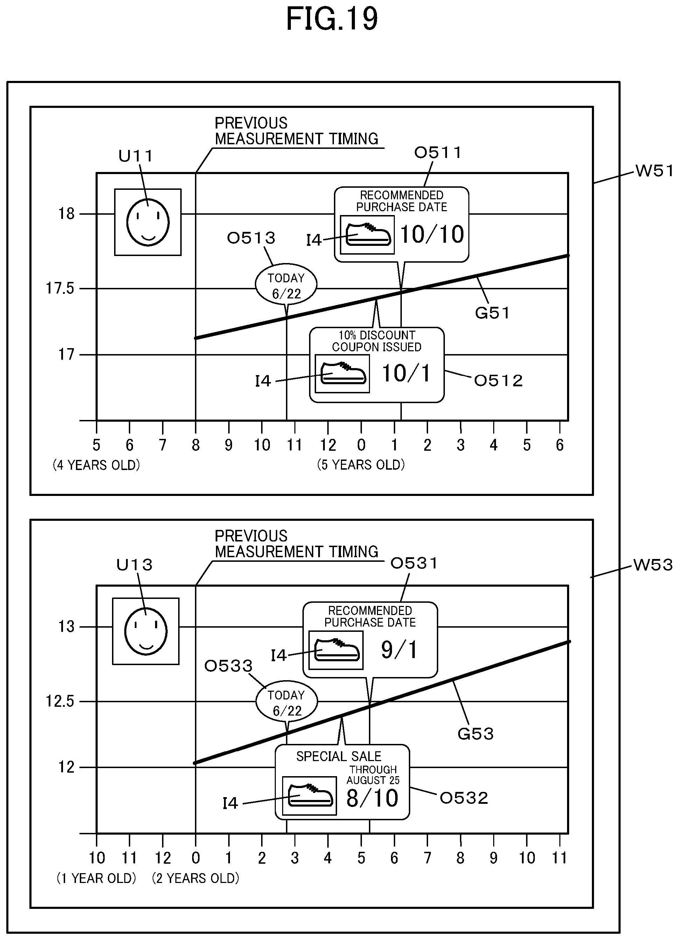

FIG. 19 is a diagram illustrating an example of a recommendation display screen in the case where secondary recommended purchase dates are shown in the recommendation display screen W5 of FIG. 8. The display elements in FIG. 19 that are the same as or similar to those in FIG. 8 are given the same reference numerals. As illustrated in FIG. 19, in the recommendation display screen in this example, the first display area W51 for the first target user (for example, wearing user U11) displays an instruction element O512 indicating a point on the first predicted change graph G51 corresponding to a secondary recommended purchase date of the first recommended purchase date. Similarly, the second display area W53 for the second target user (for example, wearing user U13) displays an instruction element O532 indicating a point on the second predicted change graph G53 corresponding to a secondary recommended purchase date of the second recommended purchase date. This allows consideration of the purchase timing of an item taking into account a bargain sale or issuance of coupons.

### [Modification Example 4]

Another possible configuration is to display upcoming scheduled dates of a bargain sale or coupon issuance on a calendar such as the example shown as the recommendation display screen W10 in FIG. 13. This can be implemented by displaying a unique mark on each scheduled date. This enables the user to know the scheduled dates of bargain sales or coupon issuance along with the recommended purchase date (first recommended purchase date or second recommended purchase date). Various scheduled dates may be displayed only when a predetermined condition is met. For example, various scheduled dates may be displayed for a user who frequently purchases items during a bargain sale, or who frequently uses coupons. Conversely, various scheduled dates may be displayed as a special offer for a user who purchases items regardless of a bargain sale, or who does not use coupons.

### [Others]

The above describes the embodiments and modification examples of the present application, but these are merely examples. The present invention can be implemented in the aspects described in the section of the disclosure of the invention, and also in various other modes that include various modifications and improvements based on the knowledge of those skilled in the art.

### [Recapitulation]

The contents disclosed herein can be recapitulated as follows.

A first embodiment is a computer system that performs control for presenting recommendation information relating to an item to a user, comprising:
a recommended date estimation section that estimates a first recommended purchase date that is a recommended purchase date of a first item, based on measurement size information relating to a measurement size of the item, body information of a first target user with respect to a wearing part on which the item is worn, and the measurement size information of a wearing item suitable for the first target user to wear at a current time point; and
a recommendation control section that provides the first recommended purchase date and additional information for recommending purchase of the first item.

A second embodiment is the computer system according to the first embodiment, wherein the recommended date estimation section estimates, based on the body information of the first target user and the measurement size information of the wearing item, a first recommended size comfortable period during which a first recommended size larger than the measurement size information of the wearing item is comfortably wearable by the first target user, and estimates the first recommended purchase date based on the first recommended size comfortable period.

A third embodiment is the computer system according to the second embodiment, wherein the additional information is information based on the first recommended size comfortable period.

A fourth embodiment is the computer system according to the third embodiment, wherein the additional information is information based on an end of the first recommended size comfortable period.

A fifth embodiment is the computer system according to any one of the first to fourth embodiments, wherein the additional information is information indicating a schedule for purchase of the first item at a lower price.

A sixth embodiment is the computer system according to any one of the first to fifth embodiments, wherein the recommended date estimation section estimates a second recommended purchase date that is a recommended purchase date of a second item, based on the measurement size information of the item, body information of a second target user with respect to a wearing part on which the item is worn, and the measurement size information of a wearing item suitable for the second target user to wear at a current time point, and
the recommendation control section provides the second recommended purchase date.

A seventh embodiment is the computer system according to any one of the first to sixth embodiments, wherein the recommendation control section provides information for displaying
a first predicted change graph that indicates predicted changes of the body information of the first target user, and
a first instruction element indicating a point on the first predicted change graph corresponding to the first recommended purchase date.

A eighth embodiment is the computer system according to the sixth embodiment, wherein the recommendation control section provides information for displaying
a first predicted change graph that indicates predicted changes of the body information of the first target user,
a first instruction element indicating a point on the first predicted change graph corresponding to the first recommended purchase date, and
a display element indicating the second recommended purchase date.

A ninth embodiment is the computer system according to any one of the first to eighth embodiments, further comprising:
an online shopping function section for selling the item through online shopping; and
a user data management section that manages data of a registered user in the online shopping and data of the first target user associated with the registered user,
wherein the recommendation control section controls the provision of information at a predetermined timing of purchase by the registered user.

A 10th embodiment is the computer system according to the sixth or eighth embodiment, wherein the recommended date estimation section estimates the first recommended size comfortable period during which the first item is comfortably wearable by the first target user, estimates the first recommended purchase date based on the first recommended size comfortable period, estimates a second recommended size comfortable period during which the second item is comfortably wearable by the second target user, and estimates the second recommended purchase date based on the second recommended size comfortable period, and
the recommendation control section provides information for simultaneous display of the first recommended size comfortable period and the second recommended size comfortable period.

An 11th embodiment is the computer system according to any one of the second to fourth embodiments, wherein the recommendation control section provides information for displaying the first recommended size and the first recommended size comfortable period in association with each other.

A 12th embodiment is the computer system according to any one of the first to 11th embodiments, wherein the recommendation control section displays a predetermined calendar display, and provides information for displaying, in the calendar display, a first identifier on a date corresponding to the first recommended purchase date, the first identifier indicating that the date is a recommended purchase date for the first target user.

A 13th embodiment is a computer system that performs control for presenting recommendation information relating to an item to a user, comprising:
a recommended date estimation section that estimates a first recommended purchase date that is a recommended purchase date of the item to be worn by a first target user, using body information of the first target user with respect to a wearing part on which the item is worn; and
a recommendation control section that performs recommended date presentation control based on the first recommended purchase date,
wherein the recommendation control section performs the recommended date presentation control, including control for providing information for displaying
   a first predicted change graph that indicates predicted changes of the body information of the first target user, and
   a first instruction element indicating a point on the first predicted change graph corresponding to the first recommended purchase date.

A 14th embodiment is a recommendation information provision control method for causing a computer system to perform control for presenting recommendation information relating to an item to a user, comprising:
estimating a first recommended purchase date that is a recommended purchase date of a first item, based on measurement size information relating to a measurement size of the item, body information of a first target user with respect to a wearing part on which the item is worn, and the measurement size information of a wearing item suitable for the first target user to wear at a current time point; and
providing the first recommended purchase date and additional information for recommending purchase of the first item.

A 15th embodiment is a recommendation information provision control method for causing a computer system to perform control for presenting recommendation information relating to an item to a user, comprising:
estimating a first recommended purchase date that is a recommended purchase date of the item to be worn by a first target user, using body information of the first target user with respect to a wearing part on which the item is worn; and
performing recommended date presentation control based on the first recommended purchase date,
wherein the recommended date presentation control includes control for providing information for displaying
   a first predicted change graph that indicates predicted changes of the body information of the first target user, and
   a first instruction element indicating a point on the first predicted change graph corresponding to the first recommended purchase date.

A 16th embodiment is a program for causing a terminal apparatus to control presentation of recommendation information on an item, the program causing the terminal apparatus to:
communicate with a server system, the server system estimating a first recommended purchase date that is a recommended purchase date of a first item, based on measurement size information relating to a measurement size of the item, body information of a first target user with respect to a wearing part on which the item is worn, and the measurement size information of a wearing item suitable for the first target user to wear at a current time point; and
control display of the first recommended purchase date and additional information on recommending purchase of the first item.

A 17th embodiment is a program for causing a terminal apparatus to control presentation of recommendation information on an item, the program causing the terminal apparatus to:
communicate with a server system, the server system estimating a first recommended purchase date that is a recommended purchase date of the item to be worn by a first target user, using body information of the first target user with respect to a wearing part on which the item is worn;
control display of a first predicted change graph that indicates predicted changes of the body information of the first target user; and
control display of a first instruction element that indicates a point on the first predicted change graph corresponding to the first recommended purchase date.

The contents disclosed herein can also be recapitulated as follows.

A 21st embodiment is a computer system that controls display, on a terminal apparatus, of recommendation information on an item wearable by a user, including:
an estimation section that estimates a first recommended purchase date that is a recommended purchase date of the item of a first recommended size that is larger than a wearing size of a first target user who wears the item, using measurement information of the first target user with respect to a wearing part on which the item is worn, and the wearing size of the first target user; and
a recommendation control section that performs recommended date presentation control, as display control on the terminal apparatus, based on the first recommended purchase date.

According to this embodiment, a first recommended purchase date can be estimated, for recommending to a first target user, purchase of an item of a first recommended size larger than a wearing size of the first target user, and recommended date presentation control based on the first recommended purchase date can be performed as display control on a terminal apparatus. This allows presentation of information indicating a recommended purchase date of a larger size than the wearing size of the first target user as a first recommended size.

A 22nd embodiment is the computer system according to the 21st embodiment, wherein the estimation section estimates, based on the measurement information and the wearing size of the first target user, a first recommended size comfortable period during which the first recommended size is comfortably wearable by the first target user, and estimates the first recommended purchase date based on the first recommended size comfortable period.

According to this embodiment, the first recommended purchase date can be estimated from the first recommended size comfortable period during which the first recommended size is comfortably wearable by the first target user.

A 23rd embodiment is the computer system according to the 21st or 22nd embodiment, wherein
the estimation section estimates a second recommended purchase date that is a recommended purchase date of the item of a second recommended size larger than a wearing size of a second target user who wears the item, using measurement information of the second target user with respect to a wearing part on which the item is worn, and the wearing size of the second target user, and
the recommendation control section performs the recommended date presentation control based on the first recommended purchase date and the second recommended purchase date.

According to this embodiment, a second recommended purchase date can be estimated, for recommending, to a second target user, purchase of an item of a second recommended size larger than a wearing size of the second target user, and recommended date presentation control based on the second recommended purchase date can be performed as display control on a terminal apparatus.

A 24th embodiment is the computer system according to the 23rd embodiment, wherein the recommendation control section performs the recommended date presentation control by displaying, on the terminal apparatus,
a first predicted change graph indicating predicted changes of measurement information based on measurement information of the first target user,
a first instruction element indicating a point on the first predicted change graph corresponding to the first recommended purchase date,
a second predicted change graph indicating predicted changes of measurement information based on measurement information of the second target user, and
a second instruction element indicating a point on the second predicted change graph corresponding to the second recommended purchase date.

According to this embodiment, a first predicted change graph indicating predicted changes of measurement information of the first target user can be displayed on the terminal apparatus, and a first instruction element can be displayed on the first predicted change graph to indicate the first recommended purchase date. Moreover, a second predicted change graph indicating predicted changes of measurement information of the second target user can be displayed on the terminal apparatus, and a second instruction element can be displayed on the second predicted change graph to indicate the second recommended purchase date.

A 25th embodiment is the computer system according to the 23rd embodiment, wherein the recommendation control section performs the recommended date presentation control by displaying, on the terminal apparatus,
a first predicted change graph indicating predicted changes of measurement information based on measurement information of the first target user,
a first instruction element indicating a point on the first predicted change graph corresponding to the first recommended purchase date,
a display element indicating the second recommended purchase date.

According to this embodiment, a first predicted change graph indicating predicted changes of measurement information of the first target user can be displayed on the terminal apparatus, and a first instruction element can be displayed on the first predicted change graph to indicate the first recommended purchase date. Moreover, a display element indicating a second recommended purchase date can be displayed on the terminal apparatus.

A 26th embodiment is the computer system according to any one of the 21st to 25th embodiments, further including;
an online shopping function section for selling the item through online shopping, with the terminal apparatus functioning as a man-machine interface; and
a user data management section that manages data of a registered user in the online shopping and data of the first target user associated with the registered user,
wherein the recommendation control section performs the recommended date presentation control at a predetermined timing of purchase by the registered user.

According to this embodiment, the recommended date presentation control can be performed at a predetermined timing of purchase by the registered user in online shopping.

A 27th embodiment is the computer system according to the 23rd embodiment, wherein the estimation section estimates, based on the measurement information and the wearing size of the first target user, a first recommended size comfortable period during which the first recommended size is comfortably wearable by the first target user, and estimates the first recommended purchase date based on the first recommended size comfortable period, and estimates, based on the measurement information and the wearing size of the second target user, a second recommended size comfortable period during which the second recommended size is comfortably wearable by the second target user, and estimates the second recommended purchase date based on the second recommended size comfortable period, and
the recommendation control section controls simultaneous display, on the terminal apparatus, of the first recommended size comfortable period and the second recommended size comfortable period.

According to this embodiment, the first recommended purchase date can be estimated from the first recommended size comfortable period during which the first recommended size is comfortably wearable by the first target user. Moreover, the first recommended purchase date can be estimated from the second recommended size comfortable period during which the second recommended size is comfortably wearable by the second target user. The first recommended size comfortable period and the second recommended size comfortable period can be displayed simultaneously on the terminal apparatus.

A 28th embodiment is the computer system according to the 27th embodiment, wherein
the recommendation control section controls display, on the terminal apparatus, of the first recommended size and the first recommended size comfortable period in association with each other, and of the second recommended size and the second recommended size comfortable period in association with each other.

According to this embodiment, the first recommended size and the first recommended size comfortable period can be displayed in association with each other on the terminal apparatus, and the second recommended size and the second recommended size comfortable period can be displayed in association with each other on the terminal apparatus.

A 29th embodiment is the computer system according to the 23rd embodiment, wherein
the recommendation control section performs the recommended date presentation control by displaying a predetermined calendar display on the terminal apparatus, and by displaying, in the calendar display:
a first identifier on a date corresponding to the first recommended purchase date, the first identifier indicating that the date is a recommended purchase date for the first target user; and
a second identifier on a date corresponding to the second recommended purchase date, the second identifier indicating that the date is a recommended purchase date for the second target user.

According to this embodiment, a first identifier can be displayed on a date corresponding to the first recommended purchase date on a calendar, to indicate that it is a recommended purchase date for the first target user, and a second identifier can be displayed on a date corresponding to the second recommended purchase date, to indicate that it is a recommended purchase date for the second target user.

A 30th embodiment is a computer system that controls display, on a terminal apparatus, of recommendation information on an item wearable by a user, including:
a first estimation section that estimates a first recommended purchase date that is a recommended purchase date of the item to be worn by a first target user, using measurement information of the first target user with respect to a wearing part on which the item is worn;
a second estimation section that estimates a second recommended purchase date that is a recommended purchase date of the item to be worn by a second target user, using measurement information of the second target user with respect to a wearing part on which the item is worn; and
a recommendation control section that performs recommended date presentation control, as display control on the terminal apparatus, based on the first recommended purchase date and the second recommended purchase date,
wherein the recommendation control section performs the recommended date presentation control by displaying, on the terminal apparatus,
   a first predicted change graph indicating predicted changes of measurement information based on measurement information of the first target user,
   a first instruction element indicating a point on the first predicted change graph corresponding to the first recommended purchase date,
   a second predicted change graph indicating predicted changes of measurement information based on measurement information of the second target user, and
   a second instruction element indicating a point on the second predicted change graph corresponding to the second recommended purchase date.

According to this embodiment, a first recommended purchase date of an item can be estimated for a first target user, and a second recommended purchase date of an item can be estimated for a second target user, and the recommended date presentation control can be performed based on the first recommended purchase date and the second recommended purchase date as display control on the terminal apparatus. As the recommended date presentation control, a first predicted change graph indicating predicted changes of measurement information of the first target user can be displayed on the terminal apparatus, and a first instruction element can be displayed on the first predicted change graph to indicate the first recommended purchase date. Moreover, a second predicted change graph indicating predicted changes of measurement information of the second target user can be displayed on the terminal apparatus, and a second instruction element can be displayed on the second predicted change graph to indicate the second recommended purchase date.

A 31st embodiment is an online shopping system including a server system that is the computer system according to any one of the 21st to 30th embodiments, and
the terminal apparatus.

According to this embodiment, an online shopping system that provides the same advantageous effects as those of the 21st to 30th embodiments can be implemented.

A 32nd embodiment is a recommendation information provision control method for causing a computer system to control display, on a terminal apparatus, of recommendation information on an item wearable by a user, including:
estimating a first recommended purchase date that is a recommended purchase date of the item of a first recommended size larger than a wearing size of a first target user who wears the item, using measurement information of the first target user with respect to a wearing part on which the item is worn, and the wearing size of the first target user; and
performing recommended date presentation control, as display control on the terminal apparatus, based on the first recommended purchase date.

According to this embodiment, a recommendation information provision control method that provides the same advantageous effects as those of the 21st embodiment can be implemented.

A 33rd embodiment is a recommendation information provision control method for causing a computer system to control display, on a terminal apparatus, of recommendation information on an item wearable by a user, including:
estimating a first recommended purchase date that is a recommended purchase date of the item to be worn by a first target user, using measurement information of the first target user with respect to a wearing part on which the item is worn;
estimating a second recommended purchase date that is a recommended purchase date of the item to be worn by a second target user, using measurement information of the second target user with respect to a wearing part on which the item is worn; and
performing recommended date presentation control, as display control on the terminal apparatus, based on the first recommended purchase date and the second recommended purchase date,
wherein the recommended date presentation control includes displaying, on the terminal apparatus:
   a first predicted change graph indicating predicted changes of measurement information based on measurement information of the first target user,
   a first instruction element indicating a point on the first predicted change graph corresponding to the first recommended purchase date,
   a second predicted change graph indicating predicted changes of measurement information based on measurement information of the second target user, and
   a second instruction element indicating a point on the second predicted change graph corresponding to the second recommended purchase date.

According to this embodiment, a recommendation information provision control method that provides the same advantageous effects as those of the 20th embodiment can be implemented.

A 34th embodiment is a program for causing a terminal apparatus to control display of recommendation information on an item wearable by a user, the program causing the terminal apparatus to:
communicate with a server system that estimates a first recommended purchase date that is a recommended purchase date of the item of a first recommended size larger than a wearing size of a first target user who wears the item, using measurement information of the first target user with respect to a wearing part on which the item is worn, and the wearing size of the first target user; and
perform recommended date presentation control based on the first recommended purchase date.

According to this embodiment, a program that provides the same advantageous effects as those of the 21st embodiment can be implemented.

A 35th embodiment is a program for causing a terminal apparatus to control display of recommendation information on an item wearable by a user, the program causing the terminal apparatus to:
communicate with a server system, the server system estimating a first recommended purchase date that is a recommended purchase date of the item to be worn by a first target user, using measurement information of the first target user with respect to a wearing part on which the item is worn, and a second recommended purchase date that is a recommended purchase date of the item to be worn by a second target user, using measurement information of the second target user with respect to a wearing part on which the item is worn;
control display of a first predicted change graph indicating predicted changes of measurement information based on measurement information of the first target user; control display of a first instruction element that indicates a point on the first predicted change graph corresponding to the first recommended purchase date;
control display of a second predicted change graph indicating predicted changes of measurement information based on measurement information of the second target user; and
control display of a second instruction element that indicates a point on the second predicted change graph corresponding to the second recommended purchase date.

According to this embodiment, a program that provides the same advantageous effects as those of the 30th embodiment can be implemented.

### [REFERENCE SIGNS LIST]

- 1000: Online shopping system
- 1100: Server system
- 110s: Operation input section
- 120s: Display section
- 130s: Communication section
- 200s: Server processing section
- 211: User management section
- 213: Online shopping function section
- 215: Acquisition section
- 217: Estimation section
- 219: Recommendation control section
- 500s:: server storage section
- 501: Server program
- 510: User management data
- 511: Registered user ID
- 520: Wearing user data
- 521: Wearing user ID
- 523: Attribute information
- 525: Measurement information
- 527: Shape data
- 529: Growth change data
- 531: Measurement date and time
- 533: Comfort level variation information
- 535: Purchase history data
- 540: Item information
- 1500: User terminal
- 110: Operation input section
- 120: Display section
- 130: Communication section
- 200: Terminal processing section
- 260: Client control section
- 261: Operation signal transmission control section
- 263: Display control section
- 500: Terminal storage section
- 502: Client program
- 9: Network

## Claims

1. A computer system that performs control for presenting recommendation information relating to an item to a user, comprising:
a recommended date estimation section that estimates a first recommended purchase date that is a recommended purchase date of a first item, based on measurement size information relating to a measurement size of the item, body information of a first target user with respect to a wearing part on which the item is worn, and the measurement size information of a wearing item suitable for the first target user to wear at a current time point; and
a recommendation control section that provides the first recommended purchase date and additional information for recommending purchase of the first item.

2. The computer system according to claim 1, wherein the recommended date estimation section estimates, based on the body information of the first target user and the measurement size information of the wearing item, a first recommended size comfortable period during which a first recommended size larger than the measurement size information of the wearing item is comfortably wearable by the first target user, and estimates the first recommended purchase date based on the first recommended size comfortable period.

3. The computer system according to claim 2, wherein the additional information is information based on the first recommended size comfortable period.

4. The computer system according to claim 3, wherein the additional information is information based on an end of the first recommended size comfortable period.

5. The computer system according to any one of claims 1 to 4, wherein the additional information is information indicating a schedule for purchase of the first item at a lower price.

6. The computer system according to any one of claims 1 to 5, wherein the recommended date estimation section estimates a second recommended purchase date that is a recommended purchase date of a second item, based on the measurement size information of the item, body information of a second target user with respect to a wearing part on which the item is worn, and the measurement size information of a wearing item suitable for the second target user to wear at a current time point, and
the recommendation control section provides the second recommended purchase date.

7. The computer system according to any one of claims 1 to 6, wherein the recommendation control section provides information for displaying
a first predicted change graph that indicates predicted changes of the body information of the first target user, and
a first instruction element indicating a point on the first predicted change graph corresponding to the first recommended purchase date.

8. The computer system according to claim 6, wherein the recommendation control section provides information for displaying
a first predicted change graph that indicates predicted changes of the body information of the first target user,
a first instruction element indicating a point on the first predicted change graph corresponding to the first recommended purchase date, and
a display element indicating the second recommended purchase date.

9. The computer system according to any one of claims 1 to 8, further comprising:
an online shopping function section for selling the item through online shopping; and
a user data management section that manages data of a registered user in the online shopping and data of the first target user associated with the registered user,
wherein the recommendation control section controls the provision of information at a predetermined timing of purchase by the registered user.

10. The computer system according to claim 6 or 8, wherein the recommended date estimation section estimates the first recommended size comfortable period during which the first item is comfortably wearable by the first target user, estimates the first recommended purchase date based on the first recommended size comfortable period, estimates a second recommended size comfortable period during which the second item is comfortably wearable by the second target user, and estimates the second recommended purchase date based on the second recommended size comfortable period, and
the recommendation control section provides information for simultaneous display of the first recommended size comfortable period and the second recommended size comfortable period.

11. The computer system according to any one of claims 2 to 4, wherein the recommendation control section provides information for displaying the first recommended size and the first recommended size comfortable period in association with each other.

12. The computer system according to any one of claims 1 to 11, wherein the recommendation control section displays a predetermined calendar display, and provides information for displaying, in the calendar display, a first identifier on a date corresponding to the first recommended purchase date, the first identifier indicating that the date is a recommended purchase date for the first target user.

13. A computer system that performs control for presenting recommendation information relating to an item to a user, comprising:
a recommended date estimation section that estimates a first recommended purchase date that is a recommended purchase date of the item to be worn by a first target user, using body information of the first target user with respect to a wearing part on which the item is worn; and
a recommendation control section that performs recommended date presentation control based on the first recommended purchase date,
wherein the recommendation control section performs the recommended date presentation control, including control for providing information for displaying
a first predicted change graph that indicates predicted changes of the body information of the first target user, and
a first instruction element indicating a point on the first predicted change graph corresponding to the first recommended purchase date.

14. A recommendation information provision control method for causing a computer system to perform control for presenting recommendation information relating to an item to a user, comprising:
estimating a first recommended purchase date that is a recommended purchase date of a first item, based on measurement size information relating to a measurement size of the item, body information of a first target user with respect to a wearing part on which the item is worn, and the measurement size information of a wearing item suitable for the first target user to wear at a current time point; and
providing the first recommended purchase date and additional information for recommending purchase of the first item.

15. A recommendation information provision control method for causing a computer system to perform control for presenting recommendation information relating to an item to a user, comprising:
estimating a first recommended purchase date that is a recommended purchase date of the item to be worn by a first target user, using body information of the first target user with respect to a wearing part on which the item is worn; and
performing recommended date presentation control based on the first recommended purchase date,
wherein the recommended date presentation control includes control for providing information for displaying
a first predicted change graph that indicates predicted changes of the body information of the first target user, and
a first instruction element indicating a point on the first predicted change graph corresponding to the first recommended purchase date.
